# EUROPÄISCHE PATENTSCHRIFT

(11) **EP 2 170 702 B1**
(45) Veröffentlichungstag und Bekanntmachung des Hinweises auf die Patenterteilung: **19.01.2011**
(21) Anmeldenummer: 08786530.9
(22) Anmeldetag: 28.07.2008
(51) Int. Cl.: B64D 11/00

(54) **AUFENTHALTS- UND SCHLAFMODUL ZUR UNTERBRINGUNG VON ZUMINDEST EINEM MITGLIED EINER FLUGZEUGBESATZUNG MIT EINEM ANDOCKBAREN TEILMODUL**
LIVING AND SLEEPING MODULE FOR HOUSING AT LEAST ONE MEMBER OF AN AIRCRAFT CREW HAVING A DOCKABLE PARTIAL MODULE
MODULE DE REPOS OU DE SIESTE DESTINE A ACCUEILLIR AU MOINS UN MEMBRE D'UN PERSONNEL NAVIGUANT, EQUIPE D'UN MODULE PARTIEL POUVANT ETRE AMARRE

(30) Priorität: 30.07.2007 DE 102007035681; 30.07.2007 US 962534 P
(43) Veröffentlichungstag der Anmeldung: 07.04.2010
(73) Patentinhaber: Airbus Operations GmbH, 21129 Hamburg (DE)
(72) Erfinder: JAKUBEC, Wojciech, 89250 Senden (DE); HUPPERT, Rüdiger, 89250 Senden (DE); LÜRDING, Kathrin, 89143 Blaubeuren (DE); SÜTTHOFF, Thomas, 20255 Hamburg (DE); ULBRICH-GASPAREVIC, Jovan, 25421 Pinneberg (DE); HELFRICH, Felix, 21147 Hamburg (DE); GOLUBOVIC, Dejan, 22549 Hamburg (DE)
(74) Vertreter: Maiwald Patentanwalts GmbH
(86) Internationale Anmeldenummer: PCT/EP2008/059889
(87) Internationale Veröffentlichungsnummer: WO 2009/016158

(56) Entgegenhaltungen:
- EP-A- 0 514 650
- EP-A- 1 010 617
- EP-A- 1 279 593
- US-A- 3 898 704
- US-A- 6 056 239
- US-A1- 2005 023 413

## Beschreibung

### Verwandte Anmeldungen

Die vorliegende Anmeldung beansprucht die Priorität der US Provisional Patentanmeldung Nr. 60/962,534, eingereicht am 30. Juli 2007 und der deutschen Patentanmeldung Nr. 10 2007 035 681.3, eingereicht am 30. Juli 2007.

### Gebiet der Erfindung:

Die vorliegende Erfindung betrifft Aufenthaltsräume in Flugzeugen für Besatzungspersönal. Insbesondere betrifft die vorliegende Erfindung ein Aufenthaltsund Schlafmodul mit einem andockbaren Teilmodul zur Unterbringung von zumindest einem Mitglied einer Flugzeugbesatzung, ein Flugzeug mit einem entsprechenden Modul und die Verwendung eines entsprechenden Moduls in einem Flugzeug.

### Technischer Hintergrund

Aufenthaltsräume für die Besatzung eines Flugzeuges (Crew), auch Crew Rest Compartment genannt (CRC), gehören zur vorgeschriebenen Pflichtausstattung von Flugzeugen bei Langzeitflügen. So wird nach internationalen Standards für Flüge mit einer Zeitdauer von 8 h bis 14 h eine Liegemöglichkeit und für Flüge über 14 h werden zwei Liegemöglichkeiten benötigt. Dies stammt auch aus der Forderung ab, dass sich ab einer bestimmten Flugdauer insgesamt zwei sich abwechselnde Cockpit-Besatzungen an Bord befinden müssen.

In den letzten Jahren wurden die Sicherheitsanforderungen in Flugzeugen wesentlich verschärft, was auch die sicherheitstechnische Separierung des Cockpit-Bereichs vom Passagierbereich betrifft. So kann es konstruktionstechnisch durchaus erwünscht sein, dass Piloten direkt räumlichen Zugang zu dem FCRC vom Cockpit aus haben, ohne in den Passagierbereich gelangen zu müssen.

Bekannte FCRC werden mit zwei nebeneinander befindlichen Liegemöglichkeiten im Deckenbereich, der Crown-Area des Flugzeuges realisiert. Meist muss die Cockpit-Besatzung einen gewissen Weg zurücklegen, um das FCRC zu erreichen. Dem einerseits beengten Aufenthaltsbereich im Inneren des Compartments folgt ein ausladender Bereich in der Passagierkabine, z.B. dem First-Class-Bereich, welcher zumindest in einem Teil nicht die volle technische Höhe aufweisen kann.

Ebenso sind bekannte Lösungen unter dem Aspekt des Kabinenkomforts für die Crewmitglieder oft nicht optimal ausgestaltet, da keine räumliche Trennung der Kabinen vorliegt.

Dabei weisen bekannte Lösungen für FCRCs 2 Liegemöglichkeiten auf. Das zweite Bett wird aber in ca. 70% - 80% der Fällen nicht benutzt, da die Crew lediglich einen weiteren Piloten mitnimmt. Das zweite Bett nimmt somit dringend benötigten Stauraum und Volumen im Flugzeug weg. Weiterhin kommt der Gewichtsanteil des unbesetzten Moduls als Nachteil hinzu, den es gerade im Zuge des Baus von Großraumflugzeugen dringend zu verhindern gilt.

Im Gegensatz zu den Lösungen für die Flight Crew (Piloten) sind die Compartments für die Cabin Crew (Service Personal) beispielsweise im hinteren Ende des Flugzeuges untergebracht. Bei dieser Anordnung ist in der Regel ein Einsatz von mindestens zwei Treppen, Leitern bzw. Treppenhäusern und Aufstiegshilfen notwendig. Bei bekannten Lösungen, in welchen Betten für beide Crew-Teile bereitgestellt werden, handelt es sich dabei lediglich um ein einzelnes Crew Rest Compartment. Jedoch handelt es sich nicht um eine Kombination von zwei unabhängigen Crew Rest Compartments. Dokument US 6,056, 239 A1, welches den nächstliegenden Stand der Technik offenbat, zeigt eine solche lösung.

Dabei sind bekannte Lösungen entweder räumlich ungünstig angeordnet (z.B. am Ende der Hauptkabine), stellen nur einen geringen Platzkomfort dar (z.B. niedrige Kopfhöhe) oder erfüllen andere Forderungen wie z.B. den Wunsch nach einer räumlichen Trennung der beiden Betten für die Flight Crew nur unzureichend. Des Weiteren ist der visuelle Einfluss auf die Kabinen oft negativ. Entscheidender Nachteil ist jedoch, dass durch die Verwendung zweier separater CRCs in dieser getrennten Anordnung wertvoller Platz verloren geht, da für jedes Compartment ein Treppenhaus verwendet werden muss. Der dadurch zusätzlich verursachte Gewichtsanteil des Flugzeuges ist gerade in Zeiten des Bedürfnisses, den Kerosinverbrauch und damit den Abgasausstoß zu reduzieren von erheblicher Bedeutung.

### Zusammenfassung der Erfindung

Es ist eine Aufgabe der vorliegenden Erfindung, ein verbessertes Aufenthalts- und Schlafmodul zur Unterbringung von zumindest einem Mitglied einer Flugzeugbesatzung bereitzustellen. Erfindungsgemäß wird diese Aufgabe durch eine Vorrichtung nach Anspruch 1 gelöst.

Es ist ein Aufenthalts- und Schlafmodul zur Unterbringung von zumindest einem Mitglied einer Flugzeugbesatzung und ein Flugzeug, welches ein solches Modul aufweist gemäß dem unabhängigen Ansprüch angegeben.

Es ist ein Aufenthalts- und Schlafmodul zur Unterbringung von zumindest einer Person, beispielsweise einem Mitglied einer Flugzeugbesatzung (ein so genanntes Crew Rest Compartment: CRC oder gegebenenfalls ein so genanntes Flight Crew Rest Compartment FCRC) angegeben. Das Aufenthalts- und Schlafmodul weist ein erstes Teilmodul zum Andocken eines zweiten Teilmoduls auf. Dabei ist das erstes Teilmodul zum Anordnen auf einer anderen vertikalen Höhe eines Flugzeuges wie das zweite Teilmodul ausgelegt, wobei zumindest das erste Teilmodul oder das zweite Teilmodul ein Verbindungselement aufweist. Dabei ist das Verbindungselement derart ausgestaltet, dass das zweite Teilmodul mittels des Verbindungselements an das erste Teilmodul angedockt werden kann. Dabei ist in diesem und in allen anderen Ausführungsbeispielen die Nutzung der Compartments durch Passagiere möglich und auch bei Bedarf gewünscht. Alle Funktionalitäten sind natürlich genauso zur Verfügung gestellt.

Weiterhin kann ein erstes Teilmodul des gesamten Aufenthalts- und Schlafmoduls als feste Installation auf dem Hauptdeck eines Flugzeuges angebracht und zum Andocken eines zweiten Teilmoduls ausgeführt sein. Hierfür weist das erste Teilmodul zum Beispiel einen Durchgang nach unten auf. Weiterhin kann das erfindungsgemäße Modul ein zweites Teilmodul aufweisen, wobei das erste Teilmodul oder das zweite Teilmodul (oder beide Teilmodule) ein Verbindungselement aufweist und wobei das zweite Teilmodul auf einem Frachtdeck bzw. im Unterflurbereich eines Flugzeuges untergebracht ist. Dabei kann das Verbindungselement des ersten Teilmoduls derart ausgestaltet sein, dass das zweite Teilmodul mittels des Verbindungselements an das erste Teilmodul angedockt werden kann. In diesem Fall erfolgt die mechanisch Fixierung der beiden Teilmodule gegeneinander durch das Verbindungselement mittels z.B. Schrauben, Klemmungen, Verklebung , Riegel oder Ähnlichem, so dass beide Teilmodule statisch gesehen eine Einheit bilden.

Es kann aber auch in jedem Ausführungsbeispiel der vorliegenden Erfindung jedes Teilmodul auf Frachtdeckebene am Fußboden des Frachtdecks, und damit am Boden des entsprechenden Teilmoduls, fixiert werden. In diesem Fall kommt dem Verbindungselement zwischen den Teilmodulen lediglich eine optische Bedeutung zu. Das Verbindungselement könnte hierbei auch lediglich als Verkleidung dienen. So kann das Verbindungselement bspw. durch eine Dichtlippe ausgeführt sein, die einen räumlich fließenden Übergang zwischen den Teilmodulen schafft. Dabei wird die komplette Kraftaufnahme und Krafteinleitung in die Struktur des Flugzeuges durch die Bodenfixierung bzw. die Bodenanbindung des Teilmoduls auf Frachtdeckebene bewerkstelligt. Dies geschieht damit analog zur üblichen Fixierung eines Frachtcontainers in einem Flugzeug. Dabei wird die Fixierung des Teilmoduls vorzugsweise mittels üblicher Fixierungspunkte vorgenommen. Durch diese Möglichkeit der Fixierung wird gewährleistet, dass das zweite Teilmodul in all seinen Funktionen und Charakteristika einem üblichen Frachtcontainer für Flugzeuge entspricht und so behandelt werden kann.

Sollte es für die Ausgestaltung eines Ausführungsbeispiels notwendig sein, so sind auch beide Fixierungsarten für jedes beliebige Teilmodul auf Frachtebene möglich. Dies gilt sowohl für alle Ausführungsbeispiele der vorliegenden Erfindung, als auch für alle erwähnten Teilmodule mit einem Verbindungselement. Dabei beinhaltet der Begriff "Andocken" und "Andockung" sowohl die beschriebenen Möglichkeiten bei der Fußbodenanbindung als auch bei der Fixierung der Module mit- und gegeneinander.

Dabei kann die Stelle, an der das Verbindungselement angebracht wird, derart ausgewählt, dass die Struktur des Fußbodens mit eventuellen Trägerelementen nicht unnötig durch das Anbringen eines Verbindungselements geschwächt wird.

Dabei ist wichtig, dass die mechanische Andockung (d.h. die Aufnahme von Kräften) über eine Fixierung am Fußboden - analog zu herkömmlichen Containern - erfolgen kann. Spricht man von der funktionalen Andockung, so dient in der Tat das Verbindungselement als Andockelement - es nimmt jedoch keine Kräfte auf, sondern erlaubt nur den Zugang bzw. den Durchgang zum angedockten Modul.

In dem ersten Teilmodul können sowohl ein Schlafbereich als auch ein Arbeitsbereich für die Mitglieder der Crew zur Verfügung gestellt werden. Diese beiden Bereiche befinden sich in erhöhter Lage gegenüber dem Hauptdeck, beispielsweise in der Crown Area des Flugzeuges. Dabei wird in dem Schlafbereich des festinstallierten Teils des Aufenthalts- und Schlafmoduls eine Liegemöglichkeit zur Verfügung gestellt.

Durch eine erste Aufstiegshilfe gelangt das Crew-Mitglied von dem Hauptdeck in das erhöht liegende erste Teilmodul des Crew Rest Compartments. Dabei kann die Aufstiegshilfe jedwede mechanische Vorrichtung sein, die einen Aufstieg von einer unteren Ebene in das erste Teilmodul ermöglicht. Im Speziellen mag diese Aufstiegshilfe eine Treppe, eine Leiter, eine einzelne Stufe oder auch ein Absatz sein, der den Aufstieg ermöglicht. Dabei ist die Aufstiegshilfe im inneren Teil des ersten Teilmoduls untergebracht, dem so genannten Treppenhaus.

Durch diese innenliegende Lösung der Aufstiegshilfe kann gegenüber einer herkömmlichen Anbringung der Aufstiegshilfe an der Stirnseite bzw. Außenseite des Teilmoduls die Möglichkeit geschaffen werden, zusätzlichen Stauraum unterhalb des ersten Teilmoduls bereitzustellen. Dieser zusätzliche Raum, der unter dem Modul als Stauraum frei wird, kann somit in voller Breite, voller Höhe und voller Tiefe z. B. für Trolleys, Gepäck, Garderobe, Sicherheitseinrichtungen, wie Feuerlöscher, oder auch anderweitig benutzt werden.

In dem oberen Bereich des ersten Teilmoduls, in dem sich auch der Schlafbereich des ersten Teilmoduls befindet, kann sich auch ein Arbeitsbereich mit Sitzgelegenheit und Tisch bzw. Ablagemöglichkeit befinden. Es mag der Arbeitsbereich vom Schlafbereich durch einen Höhenunterschied getrennt sein, wobei in diesem Fall der Höhenunterschied durch zusätzliche Stufen allgemein, also eine Aufstiegshilfe, überwunden werden kann. Dabei kann der Arbeitsbereich vom Schlafbereich durch Trennwände teilweise separiert sein. Ebenso ist eine Separierung innerhalb des Schlafraumes durch solche Trennwände möglich. Da in dem Schlafbereich mindestens eine aber durchaus auch mehrere Schlafgelegenheiten zur Verfügung gestellt werden können und ebenso für eine gewisse räumliche Trennung der Schlafkabinen gesorgt werden soll, sind solche Trennwände ein wichtiges Mittel für die Privatsphäre des Modulbenutzers. Weiterhin ist gemäß einem weiteren Ausführungsbeispiel der vorliegenden Erfindung der Arbeitsbereich mit verschiedenen Stauräumen versehen, wie z. B. Wandschränken oder normalen Schränken. Ebenso kann ein Sideboard zur Ablage von Materialien installiert sein. Durch die Bereitstellung einer oder mehrerer Schlafgelegenheiten in dem ersten Teilmodul kann die Anzahl der Schlafgelegenheiten flexibel auf die Bedürfnisse des jeweiligen Fluges bzw. der Crewgröße angepasst werden. Somit wird der mögliche Einsatzbereich des Moduls deutlich gesteigert. So werden nach internationalem Standard für Flüge unter acht Stunden keine Schlafmöglichkeit, für Flüge mit einer Zeitdauer von acht bis vierzehn Stunden eine Schlafmöglichkeit und für Flüge über vierzehn Stunden zwei Schlafmöglichkeiten benötigt.

Gemäß einem weiteren Ausführungsbeispiel des erfindungsgemäßen Moduls ist das Aufenthalts- und Schlafmodul derart ausgestaltet, dass ein zweites Teilmodul über eine Verbindungselement, welches das erste Teilmodul oder das zweite Teilmodul (oder beide Teilmodule) aufweist, mit diesem ersten Teilmodul fixiert und verbunden werden kann. Wie bereits beschrieben, kann diese Verbindung lediglich optischer, aber nicht mechanisch fixierender Art und Weise sein. Um das containerartige Teilmodul so handlebar wie einen echten Container für ein Flugzeug zu machen, kann das Modul auf Frachtdeckebene am Fußboden fest angebracht sein, so dass das Verbindungselement zum ersten Teilmodul z.B. durch eine einfache Dichtlippe ausgestaltet sein kann.

Dieses so genannte Dock-on-Modul auf Frachtdeckebene kann bei Bedarf an das erste Teilmodul des Aufenthalts- und Schlafmoduls angebracht werden. Damit wird ein hoher Grad an Flexibilität in Bezug auf die benötigten Schlafmöglichkeiten erreicht. Dabei ist der festinstallierte Teil des Crew Rest Compartments auf dem Hauptdeck des Flugzeuges installiert und liegt oberhalb des Dock-on-Moduls, welches auf dem Frachtdeck des Flugzeuges untergebracht ist. Dadurch wird nicht nur der Forderung nach getrennten Kabinen für die Crew nachgekommen, sondern man erlangt auch dadurch einen Gewinn von Fläche und Volumen durch Verlagerung eines Teiles des Compartments unter das Hauptdeck. Dabei erfolgt der Zugang von dem ersten Teilmodul in das zweite tieferliegende Teilmodul über eine zweite Aufstiegshilfe, die als Treppe oder auch Leiter bzw. einzelne Stufen ausgestaltet sein kann und durch eine Luke. Ein Vorteil kann darin bestehen, dass man bei Bedarf einfach ein Dock-on-Modul andocken kann, das direkt über das Treppenhaus des ersten Teilmoduls zugänglich ist. Dabei ist unter Andockung bzw. Andocken zum Beispiel die feste mechanische Fixierung der beiden Teilmodule in jeder möglichen Ausgestaltungsform zu verstehen. Sollte jedoch ein weiteres oder mehrere weitere Teilmodule auf Frachtdeckebene am Fußboden des Frachtdecks fixiert sein, kann das Andocken bzw. die Andockung auch lediglich die mechanische Zusammenführung der beiden Teilmodule sein, ohne dass sie gegeneinander fixiert werden müssen. Die dabei entstehende Verbindung ist eher optischer Natur. Dies gilt auch für das Andocken eines Moduls auf Frachtdeckebene an ein weiteres Modul auf Frachtdeckebene.

Es ist aber auch möglich, dass das erste Teilmodul und das zweite Teilmodule gegeneinander fixiert werden, so dass sie eine mechanische Einheit bilden.

Durch beide Fixierungsmöglichkeiten ist dabei die Möglichkeit gegeben, direkt über das Treppenhaus des ersten Teilmoduls durch eine Luke und eine zweite Aufstiegshilfe, die Teil des zweiten Teilmoduls ist, von dem ersten Teilmodul in das zweite Teilmodul zu gelangen. Dies gilt für alle Ausführungsbeispiele und alle Teilmodule der vorliegenden Erfindung.

Da nun durch die vorliegende Erfindung das Dock-on-Modul als variable und austauschbare Lösung auf dem Frachtdeck des Flugzeuges installiert ist, muss es nicht mehr den Formerfordernissen und den Sicherheitserfordernissen eines Moduls genügen, das auf dem Hauptdeck und somit im Passagierbereich bzw. im Cockpitbereich angeordnet ist. Um eine freie und möglichst uneingeschränkte Raumausgestaltung innerhalb des Passagierbereiches zu haben, müssen Crew Rest Compartments, die auf dem Hauptdeck untergebracht sind, gewisse Formerfordernisse erfüllen. So sollen diese CRCs auf dem Hauptdeck möglichst wenig invasiv in dem Passagierbereich sein, um dort genügend Platz für Stauraum, Sicherheitsvorkehrungen oder freien Raum zwecks der Komforterhöhung zu haben. Diese Formerfordernisse sind nun bei Unterbringung des Dock-on-Moduls auf dem Frachtdeck nicht mehr erforderlich, was in einer leichteren formoptimalen Ausgestaltung des containerartigen Dock-on-Moduls resultieren kann. Gerade im Zuge des Baus von Großraumflugzeugen kommt diesem Leichtbauargument immer mehr Bedeutung zu.

Aufgrund der in den letzten Jahren stark angestiegenen möglichen terroristischen Bedrohungen in Flugzeugen wird der Separierung des Cockpitbereichs vom Passagierbereich aus sicherheitstechnischen Gründen immer öfter Rechnung getragen und ein direkter Einstieg aus dem Cockpit für die Cockpitbesatzung in das Modul soll gewährleistet sein. Schließlich ist seit geraumer Zeit das Bedürfnis aufgekommen, den Cockpitbereich samt dahinterliegendem FCRC als eine Sicherheitszone zu gestalten, die sicherheitstechnisch vom Passagierbereich getrennt ist und nicht frei zugänglich ist. Dies kann aber auch bedeuten, dass die Wände des Crew Rest Compartments oder eines Dock-on-Moduls gewisse Sicherheitserfordernisse, wie Durchbrandsicherheit, Durchschusssicherheit oder Durchschlagsicherheit, aufweisen können müssen, falls sie auf dem Hauptdeck untergebracht sind. Durch die Integration des Dock-on-Moduls in das Frachtdeck des Flugzeuges entfallen diese Sicherheitserfordernisse für das Dock-on-Modul, was wiederum die Möglichkeit ergibt, das Dock-on-Modul in einer besonders leichten Weise in Material und Form auszugestalten.

Durch diese modulare Bauweise des Crew Rest Compartments sind die Kabinen nicht nur räumlich getrennt, sondern bieten auch ein hohes Maß an Flexibilität und ermöglichen durch Bereitstellung verschiedener Dock-on-Module auf dem Frachtdeck unterschiedliche Gestaltungsvarianten des gesamten Aufenthalts- und Schlafmoduls. Ebenso kann das Dock-on-Modul, falls kein zusätzliches Bett für die Flight Crew bzw. Crew benötigt wird, aus dem Frachtdeck durch die üblichen Containertransportbänder herausgenommen werden. Durch die Frachtcontainerform des Dock-on-Moduls kann es problemlos in die Umgebung des Frachtdecks mit umliegenden Frachtcontainern integriert werden.

Das zweite Dock-on-Modul, welches sich auf dem Frachtdeck des Flugzeugs befindet, kann dabei ebenfalls mindestens eine Schlafgelegenheit für die Crew zur Verfügung stellen. Erreicht wird es durch eine Luke, die das erste Teilmodul im oberen Bereich des Flugzeuges im so genannten Hauptdeck und das zweite Teilmodul verbindet. Über eine zweite Aufstiegshilfe, die jedwede mechanische Vorrichtung sein kann, die einen Aufstieg von dem unteren zweiten Teilmodul in das darüber liegende erste Teilmodul ermöglicht gelangt der Benutzer von Modul zu Modul. Im Speziellen mag diese Aufstiegshilfe eine Treppe, eine Leiter, eine einzelne Stufe oder auch ein Absatz sein, der den Aufstieg ermöglicht. Dabei kann das zweite Teilmodul von der räumlichen Ausgestaltung und der Bereitstellung von Komfortaccessoires, wie Tisch und Bett, genau gleich wie das obere erste Teilmodul ausgestaltet sein.

An einem Übergangsbereich an einer Seitenwand des zweiten Teilmoduls kann sich dabei eine Öffnung befinden, die als Luke, Tür oder Durchstieg ausgestaltet sein kann, die einen Durchgang oder Eintritt in ein nebenliegendes drittes Dock-on-Modul ermöglicht. So kann eine serielle Aneinanderschaltun von mehreren Dock-on-Modulen, die alle auf dem Frachtdeck des Flugzeuges liegen, gewährleistet sein. Dies ermöglicht nicht nur eine hohe Privatsphäre für jeden Modulbenutzer, sondern auch die individuelle Anpassung des ganzen Aufenthalts- und Schlafmoduls auf die räumlichen und personellen Erfordernisse des jeweiligen Fluges. Durch den Transport über Förderbänder im Frachtdeckbereich können diese containerartigen zweiten und dritten Teilmodule schnell und problemlos in die gewünschte modulare Position gebracht werden.

Dabei können alle verwendeten Teilmodule einen Arbeitsbereich und einen Schlafbereich aufweisen, der zumindest eine Schlafgelegenheit bereitstellt.

Durch diese modulare Einheit, bestehend aus einem ersten Teilmodul und mindestens einem zweiten Teilmodul, das auf dem Frachtdeck unterhalb des Hauptdecks angebracht ist, wird dringend benötigter Raum auf dem Hauptdeck zur Verfügung gestellt. Dieser Gewinn von Fläche durch Verlagerung verschiedener Compartmentteile unter das Hauptdeck erweist sich als besonders wichtig für den Fall, in dem keine weitere Schlafgelegenheit als diejenige, die bereits durch das erste Teilmodul auf dem Hauptdeck zur Verfügung gestellt wird, benötigt wird. Dann kann sich problemlos an dem Platz auf dem Frachtdeck, an dem sich sonst ein zweites Teilmodul befinden kann, ein weiterer Frachtcontainer befinden. Oder aber das zweite Teilmodul wird nach Herausnahme aus dem Frachtdeck nicht durch einen Frachtcontainer ersetzt, womit eine Gewichtsreduzierung des Flugzeuges erreicht wird. Da der untere Teil des Aufenthalts- und Schlafmoduls für die Crew direkt von dem obenliegenden Treppenhaus, das sich im Inneren des ersten Teilmoduls befindet, durch eine Luke erreicht werden kann, ist ein bequemer und vor allem sicherer Übertritt der Crew vom Hauptdeck in die untenliegenden Module auf dem Frachtdeck gewährleistet.

Weitere Ausgestaltungen ergeben sich aus den abhängigen Ansprüchen.

Die nachfolgenden Ausführungen beschreiben die vorliegende Erfindung unter Bezugnahme auf ein Modul zur Unterbringung von zumindest einem Mitglied einer Flugzeugbesatzung. Es wird jedoch angezeigt, dass sich diese Ausführung auch sowohl auf ein Flugzeug, welches ein entsprechendes Modul aufweist, als auch auf die Verwendung eines entsprechenden Moduls in einem Flugzeug beziehen kann.

Gemäß einer weiteren Ausführungsform des erfindungsgemäßen Moduls weist das erste Teilmodul mindestens eine Schlafgelegenheit auf.

Da in ca. 70 bis 80 % der Flüge ein festinstalliertes zweites Bett in einem Flight Crew Rest Compartment nicht benutzt wird, da die Crew nur einen weiteren Piloten mitnimmt und nicht zwei, nimmt das zusätzliche zweite Bett sozusagen Räumlichkeiten im Flugzeug weg. Dieser Raum könnte sonst eine andere Verwendung finden. Durch eine Reduzierung des Angebotes an Schlafgelegenheiten im ersten Teilmodul der vorliegenden Erfindung kann bei gleichzeitiger Bereitstellung einer oder mehrere Schlafgelegenheiten in dem zweiten Teilmodul gleichzeitig erreicht werden, dass der größtmögliche Raum innerhalb des oberen Teils des Compartments zur Verfügung gestellt wird. Dabei kann aber auch eine Minimierung des benötigten Platzes des oberen Teils des FCRCs erreicht werden. Damit kann eine geringstmögliche Invasion eines Compartments in den Passagierbereich erreicht werden. Da das zweite Teilmodul, das Dock-on-Modul, bei Nichtbedarf aus dem Frachtdeck entfernt werden kann, kann somit eine gewichtsoptimale Anpassung des Crew Rest Compartments an die benötigte Anzahl von Schlafmöglichkeiten angepasst werden. Damit kann gerade bei der aufwändigen Gewichtsoptimierung von Großraumflugzeugen ein wesentlicher Beitrag zur Leichtigkeit der Aufenthalts- und Schlafmodule geleistet werden. Ebenso ist durch die räumliche Trennung der Schlafgelegenheiten dem Bedürfnis nach erhöhtem Komfort und Privatsphäre innerhalb der Schlaf- und Aufenthaltsbereiche solcher Crew Rest Compartments Rechnung getragen.

Gemäß einem weiteren Ausführungsbeispiel des erfindungsgemäßen Moduls weist das Modul ein zweites Teilmodul auf, wobei das zweite Teilmodul mindestens eine Schlafgelegenheit aufweist.

Dabei ist in diesem und in jedem anderen Ausführungsbeispiel des erfindungsgemäßen Moduls mit einer Schlafgelegenheit auch eine Liegemöglichkeit gemeint. Als Liegemöglichkeit bzw. Schlafmöglichkeit kann jedwede Vorrichtung verstanden werden, die es einer Person ermöglicht, eine liegende Aufenthalts- und Schlafposition einzunehmen. Hierbei mag die Liegemöglichkeit als einfache Schaumstoffauflage ausgebildet sein, jedoch sind auch eine anatomisch angepasste Form der Elemente sowie besondere Konstruktionen möglich, um einen bequemen längeren Liegeaufenthalt zu erlauben. Dabei sind im Speziellen Bett, Liege, Pritsche, Ausklappbett, Umklappbett und jedwede weitere Ausführungsart einer Liegemöglichkeit zur Ausgestaltung möglich. Dabei können in jedem Ausführungsbeispiel der vorliegenden Erfindung Varianten eines Klappbettes insbesondere die Möglichkeit bieten, in einem geklappten Zustand als Tisch oder Ablage verwendet zu werden. Wird nur ein Teil des Bettes umgeklappt, so kann der restliche, verbleibende Teil des Bettes auch als Stau- oder Ablagefach genutzt werden. Weiterhin besteht bei einer Variante eines Klappbettes die Möglichkeit, dass durch das Umklappen ein Gewinn an Grundfläche und damit Bewegungsfreiheit zur Verfügung gestellt wird. Dadurch ist eine Erhöhung des Modulkomforts möglich.

Gemäß einem weiteren Ausführungsbeispiel des erfindungsgemäßen Moduls ist das erste Teilmodul als eine feste Installation auf einem Hauptdeck des Flugzeuges ausgeführt.

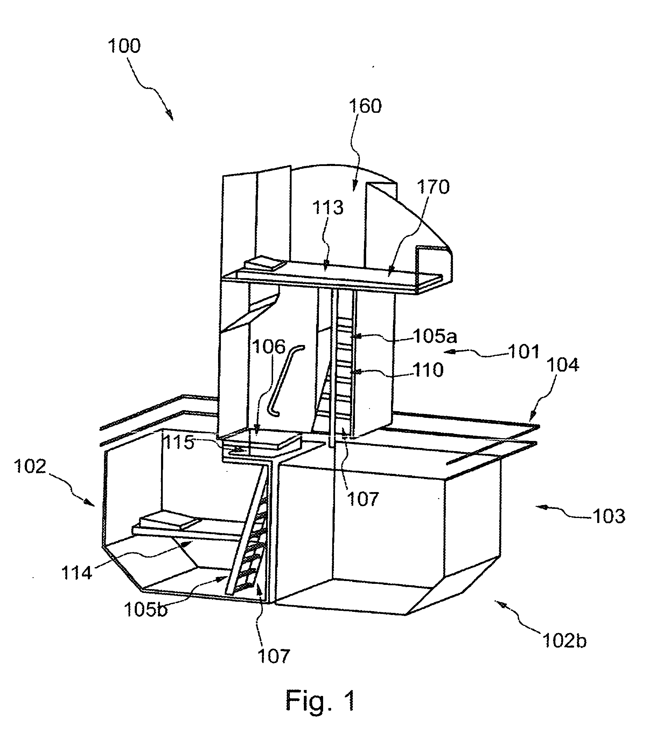

Da nach internationalen Standards für Flüge mit einer Zeitdauer von acht bis vierzehn Stunden eine Liegemögtichkeit benötigt wird, kann es sinnvoll sein, das erste Teilmodul der vorliegenden Erfindung als eine feste Installation auf dem Hauptdeck eines Flugzeuges auszugestalten, um somit mindestens einen Schlafbereich mit einer Schlafgelegenheit zur Verfügung zu stellen. An dieses erstes Teilmodul der vorliegenden Erfindung kann nun je nach Bedarf über das Verbindungselement des ersten Teilmoduls ein zweites Teilmodul angedockt werden. Dabei meint Andocken eine mechanische Verbindung, die beispielsweise durch Verschraubung zwischen den beiden Teilmodulen hergestellt wird, so dass sie eine mechanische Einheit bilden. Weiterhin können sich an das zweite Teilmodul, das sich auf dem Frachtdeck, und somit unterhalb des Hauptdecks befindet, weitere Teilmodule anschließen, die ebenfalls unter dem Hauptdeck auf dem so genannten Frachtdeck angeordnet sind. Dabei spielt das Verbindungselement eine wesentliche Rolle und ermöglicht das Andocken. Dies kann erstens das Gegeneinanderfixieren oder Miteinanderfixieren der beiden übereinanderliegenden Teilmodule sein, als auch zweitens das Herstellen einer Verbindung zwischen den Teilmodulen, die eher optischer, aber nicht statischer, also Kräfte tragender Natur ist. Dies gilt für alle Ausführungsbeispiele des erfindungsgemäßen Moduls. Wie beispielsweise in Fig. 1 zu sehen, ist dieses Verbindungselement vom Boden des Hauptdecks ausgehend bis hin zur Decke des Frachtdecks hinreichend. Dabei befindet sich das Verbindungselement am Boden des ersten Teilmoduls und ist vollständig von den Wänden des ersten Teilmoduls umgeben. Somit ist ein direkter Einstieg eines Besatzungsmitgliedes vom Treppenhaus des ersten Teilmoduls durch die Luke und das Verbindungselement hindurch in das zweite Teilmodul hinein möglich. Dabei wird eine zweite Aufstiegshilfe benötigt, über die durch die Luke in das zweite Teilmodul hineingeklettert werden kann. Ebenso können weitere Module, die neben dem zweiten Teilmodul angebracht werden, durch Verbindungselemente, die in dem Übergangsbereich liegen mit dem jeweilig benachbarten Modul fixiert, verbunden bzw. daran angedockt werden.

Im Gegensatz zur festen Installation des ersten Teilmoduls auf der Ebene des Hauptdecks ist das zweite Teilmodul und jedes weitere Teilmodul, das an das zweite Teilmodul angeschlossen werden kann, eine variable und mobile Installation auf der Frachtdeckebene.

Gemäß einem weiteren Ausführungsbeispiel der vorliegenden Erfindung weist das erfindungsgemäße Modul ein Treppenhaus und eine erste Aufstiegshilfe auf, wobei beide Teilmodule des erfindungsgemäßen Moduls direkt über das Treppenhaus erreicht werden können.

Die innenliegende Treppe bzw. das innenliegende Treppenhaus des erfindungsgemäßen Moduls ermöglicht, dass ein direkter Anschluss des Moduls an den Cockpitbereich möglich ist. Damit wird der Sicherheitsanforderung Rechnung getragen, dass der Pilot die Sicherheitseinheit oder auch Sicherheitszone, bestehend aus dem Cockpit und dem Flight Crew Rest Compartment, nicht verlassen muss, um in das Compartment zu gelangen. Der Aufstiegsbereich des Moduls ist somit in einer Ausführung derart ausgestaltet, dass es möglich ist, im direkten Zugang aus dem Cockpit zu diesem Treppenhaus des Moduls zu gelangen, ohne jedoch den Passagierraum betreten zu müssen. Ist das Crew-Mitglied sicher im Treppenhaus angekommen, kann es nun sowohl direkt in die Crown Area zur ersten Schlafgelegenheit des ersten Teilmoduls gelangen oder auch über die Luke und die zweite Aufstiegshilfe in das zweite Teilmodul, wo eine zweite Liegemöglichkeit bereitgestellt werden kann. Diese direkte Einstiegsmöglichkeit von dem Treppenhaus bzw. Aufstiegsbereich des erfindungsgemäßen Moduls in das Teilmodul, das auf Frachtdeckebene liegt, realisiert auch möglichst kurze Zugangswege für die Besatzungsmitglieder.

Gemäß einem weiteren Ausführungsbeispiel des erfindungsgemäßen Moduls weist das Modul eine zweite Aufstiegshilfe und eine Luke auf, wobei die zweite Aufstiegshilfe und die Luke zur Bereitstellung eines Zugangs vom ersten Teilmodul in das zweite Teilmodul von dem Hauptdeck aus durch die Luke ausgeführt sind.

Dabei kann die Aufstiegshilfe jedwede mechanische Vorrichtung sein, die einen Aufstieg von einer unteren Ebene im zweiten Teilmodul auf das Hauptdeck ermöglicht. Im Speziellen mag diese Aufstiegshilfe eine Treppe, eine Leiter, eine einzelne Stufe oder auch ein Absatz sein, der den Aufstieg ermöglicht. Die Luke ist hingegen als mechanisches Bauteil realisiert, das im aufgeklappten Zustand einen Einstieg von dem oberen Hauptdeckbereich in den unteren Frachtdeckbereich ermöglicht und bei geschlossenem Zustand beide Teilbereiche voneinander separiert. Da die Luke im Bodenbereich des Hauptdecks integriert ist, ist sie derart mechanisch ausgestaltet, dass sie von Personen, die das Modul benutzen, mit ihrem gesamten Körpergewicht betreten werden kann.

Gemäß einem weiteren Ausführungsbeispiel des erfindungsgemäßen Moduls ist das zweite Teilmodul in der Form eines Frachtcontainers für ein Flugzeug ausgestaltet.

Da das zweite Teilmodul im Frachtdeck angebracht wird, und es somit keine Formerfordernisse und Sicherheitserfordernisse des Hauptdecks erfüllen muss, kann es sich als vorteilhaft erweisen, das zweite Teilmodul in Form eines Frachtcontainers, wie er für ein Flugzeug üblich ist, auszugestalten. Dabei ist eine problemlose Integration des zweiten Teilmoduls in die Umgebung der Frachtcontainer gegeben. Es kann dadurch ein Gewichtsvorteil entstehen, da evtl. Sicherheitskriterien, wie durchschlagsicher, durchbrandsicher oder gar durchschusssicher, die für die Hauptdeckebene bestehen können, auf dieser Frachtdeckebene nicht mehr erforderlich sind. Durch die Ausgestaltung des zweiten Teilmoduls in Form eines Frachtcontainers kann dieses zweite Teilmodul im Rahmen des Transports während eines Umbaus zur gewünschten Modulvariante des erfindungsgemäßen Moduls wie ein normaler Frachtcontainer behandelt und transportiert werden. Dies erhöht die Flexibilität und Mobilität des erfindungsgemäßen Moduls deutlich.

Gemäß einem weiteren Ausführungsbeispiel des erfindungsgemäßen Moduls weist das zweite Teilmodul einen Übergangsbereich mit einer Öffnung auf, wobei die Öffnung zum Übertritt eines Besatzungsmitglieds von dem zweiten Teilmodul in weitere Teilmodule ausgestaltet ist. Dabei sind die weiteren Teilmodule ebenso wie das zweite Teilmodul auf dem Frachtdeck des Flugzeugs untergebracht.

Ausgehend von der Bereitstellung eines minimalen Angebots an Schlafgelegenheiten für die Crew, also eines festinstallierten Crew Rest Compartments auf der Hauptdeckebene mit einem Bett, kann durch die erfindungsgemäße modulare Andockvariante in einem ersten Schritt durch ein zweites Teilmodul, welches sich auf dem Frachtdeck befindet, eine zweite Schlafgelegenheit bereitgestellt werden. In weiteren Schritten ist es durch das erfindungsgemäße Modul möglich, weitere Teilmodule, die sich ebenfalls auf dem Frachtdeck befinden, an das zweite Teilmodul anzudocken. Dazu ist das zweite Teilmodul und ebenso jede weiteren Module auf dem Frachtdeck mit einem Übergangsbereich und einer Öffnung versehen, die den Übertritt durch das zweite Teilmodul in jedes weitere Teilmodul ermöglichen. Die Andockung geschieht dabei analog zur Andockung des zweiten Teilmoduls an das erste Teilmodul, mit allen dazugehörigen mechanischen Voraussetzungen.

Dabei kann die Öffnung eine Aussparung in der Seitenwand der Frachtdeckteilmodule sein. Es ist jedoch auch eine Ausgestaltung als Tür, Klappe, Luke oder Durchgangskanal möglich. Dabei ist jedes weitere Teilmodul derart ausgestaltet, dass es unabhängig von jedem weiteren Teilmodul auch an das erste Teilmodul, welches sich auf dem Hauptdeck befindet, angedockt werden kann. Jedes weitere Teilmodul kann somit neben einem Übergangsbereich und einer Öffnung zur Andockung an weitere Teilmodule einen Bereich in der Deckenfläche aufweisen, der derart ausgestaltet ist, dass es an das Verbindungselement des ersten Teilmoduls angebracht und fixiert werden kann. Dies gilt für alle Teilmodule auf Frachtdeckebene.

Diese zusätzliche modulare Erweiterung auf Frachtdeckebene ermöglicht es, das erfindungsgemäße Aufenthalts- und Schlafmodul vollständig an die Bedürfnisse der Crew anpassen zu können, ohne auf dem Hauptdeck des Flugzeugs installationstechnische Veränderungen vornehmen zu müssen. Da alle weiteren Teilmodule auf Frachtdeckebene in Form eines gewöhnlichen Flugzeugcontainers bzw. Frachtcontainers für ein Flugzeug ausgestaltet sein können, ist eine perfekte Integration dieser Teile des Moduls in der Umgebung der Frachtcontainer gegeben. Ebenso ist ein einfacher und praktikabler Transport der weiteren Teilmodule auf Frachtdeckebene durch die zur Verfügung stehenden Transportbänder für Frachtcontainer ein deutlicher Vorteil. Dabei ist es durchaus möglich, dass jedes einzelne Teilmodul sowohl auf Hauptdeckebene als auch auf Frachtdeckebene lediglich als Schlafbereich, lediglich als Arbeitsbereich, oder auch als Aufenthaltsund Schlafbereich ausgestaltet ist. Somit kann ein jedes Modul eine oder mehrere Schlafgelegenheiten, eine oder mehrere Sitzgelegenheiten, verschiedensten Stauraum und auch verschiedene Ablageflächen bzw. Tische zur Verfügung stellen. Auch ein leeres Modul zur maximierten Bereitstellung von Stauraum ist in allen Ausführungsformen denkbar.

Gemäß einem weiteren Ausführungsbeispiel des erfindungsgemäßen Moduls weist das erste Teilmodul einen ersten Schlafbereich und einen Aufstiegsbereich zum Aufstieg von einer unteren Ebene in auf.

Der Aufstiegsbereich ist dabei mit der ersten Aufstiegshilfe versehen, die jedwede mechanische Vorrichtung sein kann, die einen Aufstieg von der unteren Ebene in das erste Teilmodul ermöglicht. Im Speziellen mag diese Aufstiegshilfe eine Treppe, eine Leiter, eine einzelne Stufe oder auch ein Absatz sein, der den Aufstieg ermöglicht. Die Aufstiegshilfe zeichnet sich im Wesentlichen dadurch aus, dass sie einen direkten Abstieg von dem oberen Bereich des ersten Teilmoduls auf Hauptdeckebene ermöglicht und direkt in den Einstieg zum zweiten Teilmodul, welches auf Frachtdeckebene angeordnet ist, hinführt. Dabei ist von Vorteil, dass der Aufstiegsbereich innenliegend in dem ersten festinstallierten Teilmodul angebracht ist, und nicht wie bei bisherigen Lösungen an der Stirnseite oder Außenseite des Teilmoduls. Dadurch kann jeglicher Raumverlust durch Hineinragen der Aufstiegshilfe in den Gangbereich der unteren Ebene vermieden werden. Sollten es die Anforderungen an das Modul und die untere Ebene aber erforderlich machen, so ist auch eine außenliegende Ausgestaltung des Aufstiegsbereichs in diesem und in jedem anderen Ausführungsbeispiel des erfindungsgemäßen Moduls möglich. Die bisherige Lösung der Anbringung der Aufstiegshilfe an der Stirnseite des Moduls wird in der vorliegenden Erfindung verbessert, so dass der Raum unter dem Modul vollständig als Stauraum zur Verfügung steht. Der erste Schlafbereich des ersten Teilmodul hingegen kann sowohl parallel zur Flugzeuglängsachse als auch quer zur Flugzeuglängsachse in jedem Ausführungsbeispiel der vorliegenden Erfindung ausgestaltet sein. Aber auch jede angewinkelt Lösung ist möglich. Dabei stellt er mindestens eine Schlafgelegenheit für die Crew zur Verfügung und setzt sich deutlich von dem möglichen Arbeitsbereich des ersten Teilmoduls ab. In dem Modul ist vorgesehen, dass die beiden Bereiche voneinander separiert werden können, um den Komfort und die Privatsphäre eines jeden Benutzers zu erhöhen.

Gemäß einem weiteren Ausführungsbeispiel des erfindungsgemäßen Moduls weist das erste Teilmodul einen Arbeitsbereich zum Aufenthalt eines Mitglieds der Flugzeugbesatzung auf.

Dabei kann dieser Arbeitsbereich in diesem und in allen anderen Ausführungsbeispielen auch vollständig und umfassend als Erholungsbereich genutzt werden. In diesem Arbeitsbereich wird sowohl eine Sitzgelegenheit als auch ein Tisch zur Verfügung gestellt. Als Sitz kann hierunter beispielsweise ein Klappsitz, ein Flugzeugsitz, ein Passagiersitz, ein Business-Class-Sitz und ein Komfort-Cabin-Attendant-Sitz verstanden werden. Ebenso kann die Sitzgelegenheit als TTLzertifizierbare Sitzgelegenheit ausgestaltet sein, wobei TTL für Taxi Take-off Landing zu verstehen ist. Weiterhin ist der bereitgestellte Tisch ein Tisch aus der Gruppe bestehend aus einem Klapptisch, massivem Tisch, Rückenlehnenausklapptisch und schwenkbarem Tisch. Weiterhin ist der Arbeitsbereich des erfindungsgemäßen Moduls mit verschiedenen Stauräumen versehen, wie z. B. Wandschränken oder normalen Schränken. Ebenso ist ein Sideboard zur Ablage von Materialien installiert.

Es mögen der Arbeitsbereich und Schlafbereich durch einen Höhenunterschied getrennt sein, wobei in diesem Fall der Höhenunterschied durch zusätzliche Stufen, allgemein als eine Aufstiegshilfe, überwunden werden kann. Dabei ist der Arbeitsbereich vom Schlafbereich durch Trennwände teilweise separiert. Ebenso ist eine Separicrung innerhalb des Schlafraumes durch solche Trennwände möglich.

Der Arbeitsbereich des Moduls kann durch seine räumliche Ausgestaltung einerseits als Erholungsraum genutzt werden, was in den bisher bekannten FCRCs nicht möglich war, andererseits wird erhöhten Komfortansprüchen, wie Sitzmöglichkeit, Stehhöhe und Kopffreiheit im Schlafbereich, Rechnung getragen.

Die räumliche Anordnung des Schlaf- und Arbeitsbereichs ermöglicht, dass genügend Platz für den Erholungsraum zur Verfügung gestellt wird. Neben der Pflichtausstattung von Flugzeugen bezüglich genügender Schlafmöglichkeiten für die Besatzungsmitglieder, bietet ein Modul mit Arbeitsbereich erheblich mehr Flexibilität und Gestaltungsmöglichkeiten für die Besatzungsmitglieder innerhalb ihrer Ruhe- und Pausezeiten. Damit wird der gesamte Komfort des Compartments deutlich gesteigert.

Gemäß einem weiteren Ausführungsbeispiel des erfindungsgemäßen Moduls ist das erste Teilmodul derart eingerichtet, dass das Volumen unter dem Arbeitsbereich in voller Breite, voller Höhe und voller Tiefe als Stellplatz zur Verfügung steht.

Dies ist im Wesentlichen dadurch erreicht, dass der Aufstiegsbereich und die Aufstiegshilfe des ersten Teilmoduls nicht an der Außenseite oder Stirnseite des Moduls angebracht sind. Dies resultiert in einer uneingeschränkten Bereitstellung von Stauraum unterhalb des Arbeitsbereiches. Dieser Stauraum kann somit in voller Breite, voller Tiefe und voller Höhe z. B. für Trolleys, Gepäck, Garderobe, Sicherheitseinrichtungen, wie Feuerlöscher, oder auch anderweitig benutzt werden. Ebenso ist diese Ausgestaltung leichter als bekannte Ausgestaltungen. Gerade in Zeiten der Großraumflugzeuge wird dieses Argument immer wichtiger und verdeutlicht zugleich die Vorteilhaftigkeit dieser Lösung.

Gemäß einem weiteren Ausführungsbeispiel des erfindungsgemäßen Moduls weist der Arbeitsbereicht zumindest ein Element ausgewählt aus der Gruppe bestehend aus Sitzgelegenheit, Tisch und einen Eingangsbereich auf.

Durch die Integration einer Sitzgelegenheit mag der Komfort und die Flexibilität des erfindungsgemäßen Moduls zusätzlich gesteigert werden. So ist ein Besatzungsmitglied, das sich im erfindungsgemäßen Modul aufhält, nicht grundsätzlich gezwungen sich in eine liegende Position zu begeben, vielmehr kann sich für die den individuellen, derzeitigen Vorlieben entsprechende Aufenthaltsposition frei entschieden werden. Somit resultiert auch hieraus ein angenehmes Aufenthaltsgefühl im Modul. Der Komfort wird darüber hinaus ebenfalls gesteigert. Ebenfalls stellt die Integration eines Tisches eine erhebliche Komforterhöhung dar, die das mögliche Tätigkeitsspektrum eines Besatzungsmitglieds in dem Modul deutlich verbreitert.

Mit der Integration eines Eingangsbereiches kann die Funktionalität des erfindungsgemäßen Moduls nochmals erhöht werden. So ist eine Verwendung des Eingangsbereiches als Umkleidekabine, bevorzugt für Besatzungsmitglieder, möglich. Auch ermöglicht ein Eingangsbereich, bevorzugt in Fußbodenhöhe des Moduls, ein wesentlich einfacheres Erreichen der einzelnen Komponenten des Moduls, da nicht direkt in diese eingestiegen bzw. eingeklettert werden muss. Eine entsprechend großzügige Ausgestaltung eines Eingangsbereiches vermag den Aufenthalt im erfindungsgemäßen Modul angenehmer zu gestalten.

Gemäß einem weiteren Ausführungsbeispiel des erfindungsgemäßen Moduls ist die Sitzgelegenheit eine Sitzgelegenheit aus der Gruppe bestehend aus Klappsitz, Flugzeugsitz, Passagiersitz, Business-Class-Sitz, TTL-Sitz und High-Komfort-Cabin-Attendant-Sitz.

Um einerseits möglichst flexible Anpassungen auf gesonderte Wünsche zu ermöglichen, andererseits jedoch auch z. B. maximalen Komfort bieten zu können, mag die Sitzgelegenheit verschieden realisiert werden. So ist einerseits der Einbau eines Klappsitzes möglich. Hierbei ist die funktionale Grundanforderung, die Bereitstellung einer Sitzgelegenheit, vollumfänglich realisiert, jedoch ergeben sich weitere Vorteile aus dem gesteigerten Platzangebot, das ein nicht benötigter Klappsitz mit eingeklappter Sitzfläche oder auch mit eingeklappter Rückenlehne bzw. Rückenstützen, soweit vorgesehen, zur Verfügung zu stellen vermag. Auch mögen geklappte Komponenten weitere Funktionen übernehmen, z. B. durch Bereitstellen weiterer Auflage- bzw. Ablageflächen.

Ist hingegen ein erhöhter Komfortbedarf vorhanden, so lässt sich die erfindungsgemäße Sitzgelegenheit auch als regulärer Flugzeugsitz bzw. Passagiersitz realisieren, auch ist der Einbau eines Sitzes mit erweiterten Kornfortmerkmalen, wie z. B. ein Business-Class-Sitz oder auch ein High-Komfort-Cabin-Attendant-Sitz möglich. Dieses mag zusätzlich Vorteile aufweisen, wie z. B. erweiterte Möglichkeiten zur Steuerung mechanischer und elektronischer Komponenten des Compartments, wie Luftstrom, Licht, Unterhaltungselektronik, wie z. B. Video/DVD-Wiedergabe auf einem entsprechenden Schirm, Temperatur, Kommunikation. Auch ermöglicht ein Business-Class-Sitz die einfache Integration einer zusätzlichen Stellfläche, wie z. B. ein in der Armlehne oder anderweitig verstauter Klapptisch. Somit mag eine Integration eines separaten Tisches für die Sitzgelegenheit im Compartment nicht notwendig sein.

Gemäß einem weiteren Ausführungsbeispiel des erfindungsgemäßen Moduls ist der Tisch ein Tisch aus der Gruppe bestehend aus Klapptisch, massivem Tisch, Rückenlehnenausklapptisch und schwenkbarem Tisch.

Um einerseits eine möglichst flexible Anpassung auf verschiedene Wünsche hinsichtlich des Komforts und der Möblierung innerhalb des Compartments zu ermöglichen, andererseits jedoch auch z. B. maximalen Komfort bieten zu können, kann der Tisch verschieden realisiert werden. So ist einerseits der Einbau eines Klapptisches möglich. Hierbei ist die funktionale Grundanforderung die Bereitstellung eines Tisches vollumfänglich realisiert, jedoch ergeben sich weitere Vorteile aus dem gesteigerten Platzangebot, das ein nicht benötigter Klapptisch mit eingeklappter Tischfläche zur Verfügung zu stellen vermag. Auch mögen geklappte Komponenten weitere Funktionen übernehmen, z. B. durch Bereitstellen weiterer Auflage- bzw. Ablageflächen. Soll jedoch höherer Komfortbedarf realisiert werden, so kann auch ein massiver Tisch in fester Fixierung angebracht werden. Um eine möglichst flexible und mobile Lösung zu gestalten, ist der Tisch auch in schwenkbarer Ausführung zu realisieren.

Gemäß einem weiteren Ausführungsbeispiel des erfindungsgemäßen Moduls ist das erste Teilmodul derart ausgebildet, um im Wesentlichen direkt an das Cockpit anzuschließen.

Durch eine entsprechende Ausgestaltung lässt sich der Platzbedarf weiter reduzieren. Das Modul, welches im Wesentlichen für die Cockpitbesatzung Verwendung findet, rückt räumlich näher an das Cockpit heran. Hierdurch lassen sich Wege und damit Wegzeiten für die Cockpitbesatzung minimieren. Damit kann dem immer wichtiger werdenden Grund der Separierung des Cockpitbereichs vom Passagierbereich aus sicherheitstechnischen Gründen Rechnung getragen werden und ein direkter Einstieg aus dem Cockpit für die Cockpitbesatzung in das Modul ist direkt möglich. Schließlich ist seit geraumer Zeit das Sicherheitsbedürfnis aufgekommen, den Cockpitbereich samt dahinterliegendem FCRC als eine Sicherheitszone zu gestalten, die sicherheitstechnisch vom hinteren Passagierbereich getrennt und nicht frei zugänglich ist. Ebenso wird durch die direkte Ausgestaltung des Moduls an das Cockpit ein geringerer optischer und räumlicher Eingriff in den Passagierbereich gewährleistet. Dies hat sowohl zur Folge, dass das Kabinendesign nicht beeinflusst wird als auch, und das ist ganz wesentlich, dass mehr Volumen für potenzielle Sicherheitsvorrichtungen im Kabinenbereich zur Verfügung steht. Diese Möglichkeit der Ausgestaltung der vorliegenden Erfindung schließt jedoch nicht aus, dass das erste Teilmodul an jeder Position entlang der Längsachse des Flugzeuges installiert sein kann. Ebenso ist an jeder Position entlang dieser Längsachse des Flugzeuges das Andocken des zweiten Teilmoduls auf Frachtebene möglich. Auch für alle weiteren Teilmodule auf Frachtebene, die an das zweite Teilmodul angedockt werden können, besteht keine Einschränkung hinsichtlich der Positionierung des ersten festinstallierten Teils auf Hauptdeckebene.

Weiterhin sind gemäß einem weiteren Ausführungsbeispiel des erfindungsgemäßen Moduls beide Teilmodule durch zumindest ein Element ausgewählt aus der Gruppe bestehend aus ein einziges Treppenhaus, eine einzige Leiter, ein einziger Gang und / oder eine einzige Luke miteinander verbunden.

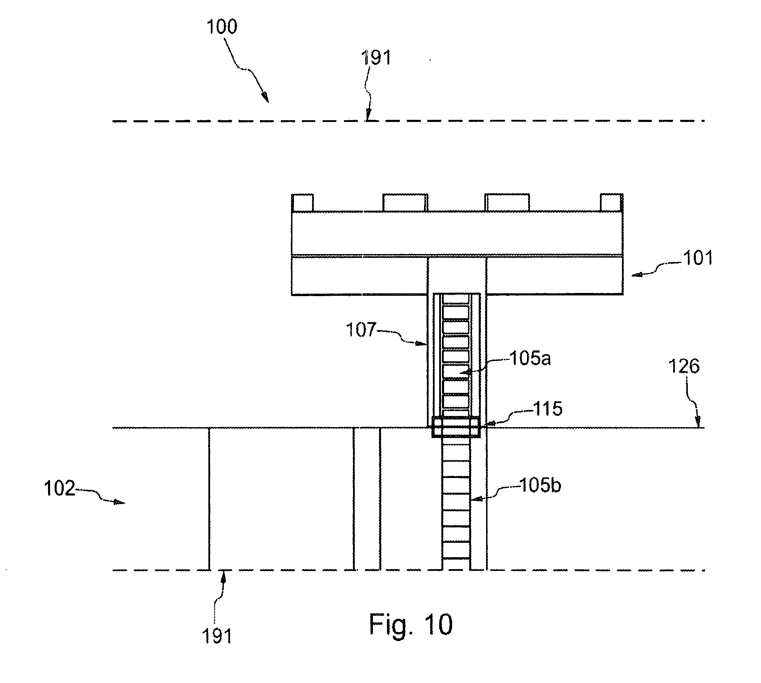

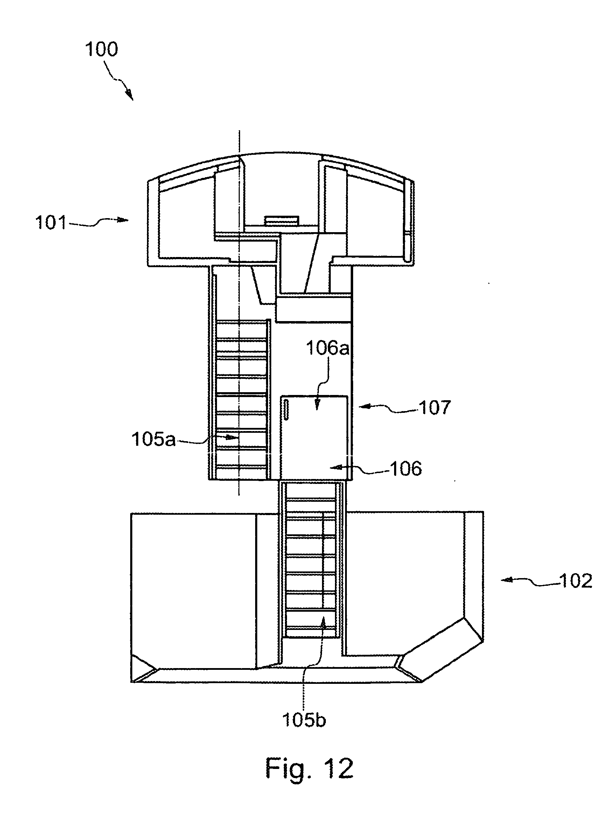

Dabei ist die Verknüpfung "und / oder", derart zu verstehen, dass jede Kombination der technischen Merkmale "Treppenhaus", "Leiter", "Gang" und "Luke" die mit "und" und "oder" formuliert werden können möglich für das erfindungsgemäße Modul sind. Durch diese Kombination zweier CRCs (Crew Rest Compartments) mit einem einzigen Treppenhaus mit einer einzigen Treppe bzw. anderweitiger Aufstiegshilfe kann erheblich Fläche für weitere Sitze, Trolleys bzw. beliebige Monument gewonnen werden. Dabei kann am meisten Platz und Fläche eingespart werden, wenn die Teile des Treppenhauses vom ersten Teilmodul in z-Richtung direkt über oder unter den Teilen des Treppenhauses des zweiten Teilmoduls angeordnet sind. Dies ist anschaulich und klar in den Figuren 10, 16 und 14 zu sehen. Sollten gewisse Anforderungen beim Einbau und der Platzierung beider Teilmodule bestehen, so ist es auch möglich, dass es zwar lediglich ein Treppenhaus gibt, aber beide Aufstiegshilfen seitlich, genauer in x- und y-Richtung, gegeneinander versetzt sind. Dies ist deutlich in Figur 12 zu sehen.

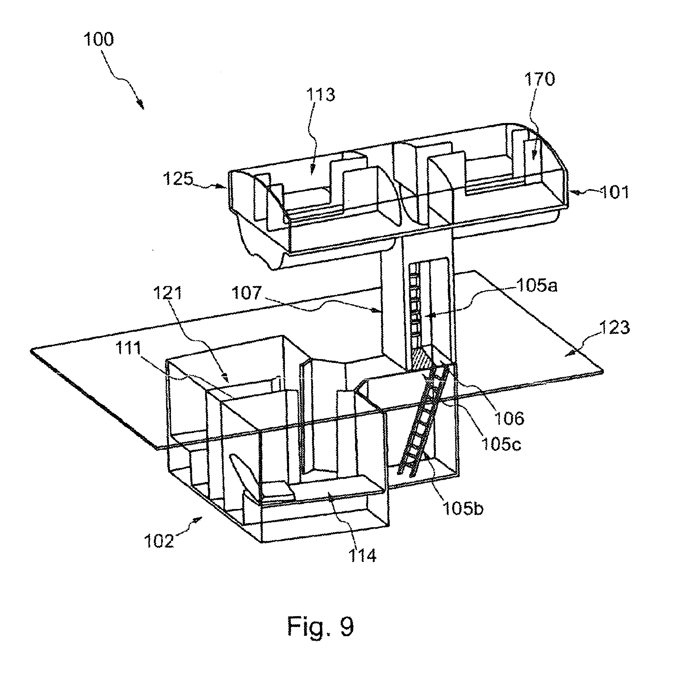

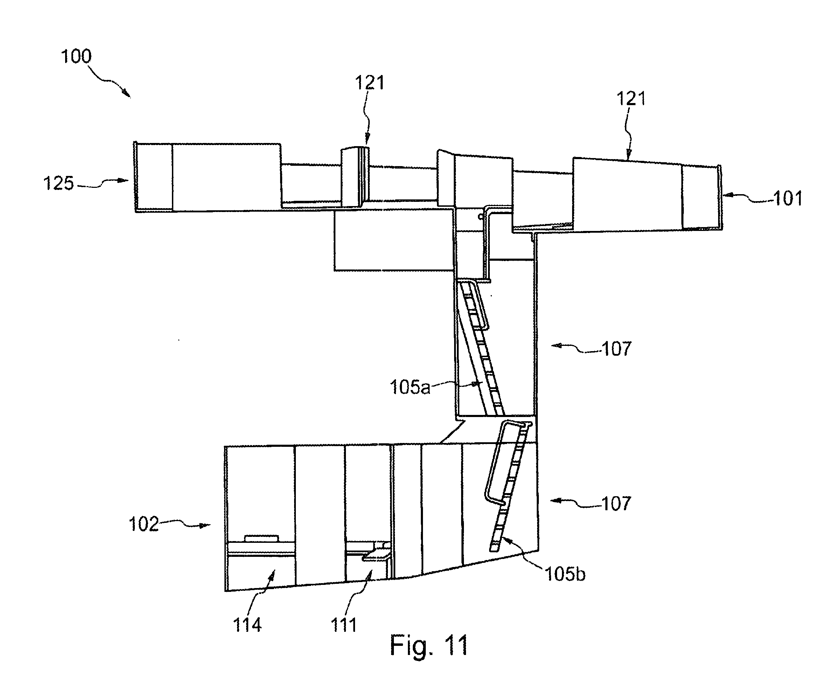

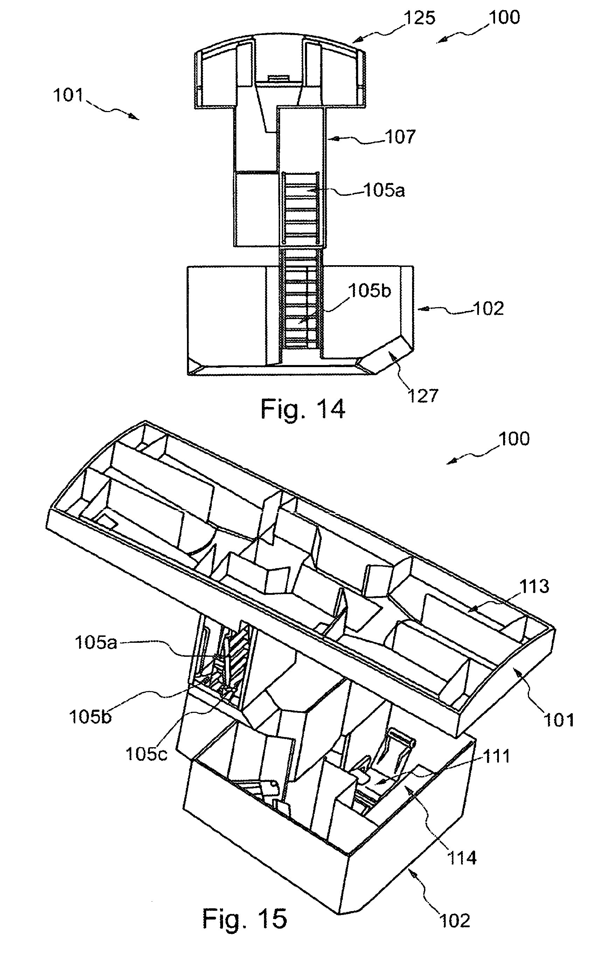

Es ist hiermit aber auch eine Ausführungsform beschrieben, in der zwar mehrere Elemente als Aufstiegshilfe verwendet werden, sich jedoch bei Kombination beider Module nur ein einziges, Treppenhaus ausbildet. Dadurch wird das Ziel der Minimierung der beanspruchten Fläche erreicht. So ist in den Figuren 11 und 12 gut zu sehen, dass zwei Treppenteile zum Aufstieg vom unteren zum oberen Teilmodul benötigt werden. Jedoch ist dem Anspruch, die für den Übergang benutzte Fläche zu minimieren durch das senkrechte Treppenhaus, Rechnung getragen. Um möglichst wenig Bodenfläche für das Treppenhaus zu beanspruchen sind die Treppen und Aufstiegshilfen vorzugsweise senkrecht ausgestaltet. Dabei kann es für den Benutzer schwierig sein, direkt in den senkrechten Auf- oder Abstiegsbereich zu gelangen, weshalb eine zusätzliche Aufstiegshilfe, wie etwa ein zusätzliches Trittbrett installiert sein kann. Dies ist in den Figuren 9 und 15 gezeigt.

Es können beide Teilmodule, die jeweils unabhängige Compartments sind und somit in dem gesamten Compartment sogenannte Sub-Compartments darstellen unabhängig voneinander auf allen Ebenen des Flugzeuges installiert und verwendet werden. Dabei wird der Begriff "Sub-Compartment" im Folgenden gleichwertig zu dem bisher benutzten Begriff "Teilmodul" verwendet.

Das zweite Teilmodul ist somit weder in Form noch in Funktionalität containerartig ausgestaltet, sondern besteht als vollwertiges Compartment. Sollte ein Teilmodul alleine installiert sein, ist der Andock-Bereich, an welchen in anderen Fällen das zweite Teilmodul anschließt, immer so ausgeführt, dass die volle Funktionalität des ersten Teilmoduls zur Verfügung gestellt wird. Das bedeutet im Speziellen, dass eine Luke, welche beide Teile möglicherweise durch einen Boden hindurch verbindet in geschlossenem Zustand ein Bodenelement darstellt. In diesem Fall weist die Luke entsprechende mechanische Charakteristika eines Bodenelements auf.

Zusätzlich kann eines der CRC (also eines der Teilmodule) als Dock-on-Modul realisiert werden, wodurch die Flexibilität nochmals gesteigert wird. Dabei erfolgt das Andocken mittels des oben ausführlich beschriebenen Verbindungselements. Durch diese Kombination zweier Teilmodule kann durch die Einsparung eines Treppenhauses das Gewicht reduziert werden.

Weiterhin stellt gemäß einem weiteren Ausführungsbeispiel des erfindungsgemäßen Moduls das zweite Teilmodul in Funktion und Optik ein vollwertiges Compartment für den Kabinenbereich dar.

Ein vollwertiges Compartment ist hierbei ein Compartment, das ohne weitere Anpassungen in dem Kabinenbereich als Monument verwendet werden kann. So ist es unter ästhetischen Gesichtspunkten, also in Bezug auf Form, Material und Farbe so ausgestaltet, dass es den Anforderungen der Fluglinie entspricht, um es im Kabinenbereich, in dem sich die Passagiere aufhalten, einbauen zu können. Um im Oberflurbereich, also auch in der Kabine, sowohl eine mechanisch, als auch optisch gute Anbindung an andere Monument zu gewährleisten, ist das zweite Teilmodul nicht containerartig ausgeführt, sondern entspricht einem normalen, vollwertigen Compartment. Dies beinhaltet auch, dass eine Montage oder Fixierung über die Seitenwände erfolgen kann; im Gegensatz zu den Container-Compartments, die auch über den Boden auf dem Frachtdeck fixiert werden können. Weiterhin ist die äußere Form des Moduls nicht der Form eines Containers angepasst, sondern sie ist in vollem Umfang einem CRC auf Kabinenebene gleich.

Es ist also neben der Farbe, Form und Material auch in seiner vollen Funktion einem Compartment angeglichen, dass lediglich für den Einsatz auf Hauptdeckebene ausgelegt ist.

Weiterhin ist gemäß einem weiteren Ausführungsbeispiel des erfindungsgemäßen Moduls das erste Teilmodul in einer Crown Area des Flugzeuges angeordnet.

Das erste Teilmodul bzw. das erste Sub-Compartment befindet sich somit auf dem Hauptdeck des Flugzeuges. Die Verbindung zwischen dem ersten Teilmodul und dem zweiten Teilmodul kann dabei durch eine Luke oder ein Treppenhaus (stairhouse) erfolgen. Durch die Anordnung eines einzelnen Bettes in der Crown Area, welche den Deckenbereich des Hauptdecks oder der Kabine bildet, kann der negative Einfluss auf die Kabine deutlich minimiert werden.

Weiterhin ist gemäß einem weiteren Ausführungsbeispiel des erfindungsgemäßen Moduls das zweite Teilmodul auf dem Hauptdeck angeordnet.

Sollten es die Anforderungen verlangen, so kann das zweite Teilmodul auch auf dem Hauptdeck, also in der Kabine angeordnet sein. Insbesondere kann das erfindungsgemäße Modul also das erste Teilmodul in der Crown Area des Flugzeuges enthalten, während das zweite Teilmodul auf dem Hauptdeck angeordnet ist. Damit besteht also die Möglichkeit, beide Module bzw. Sub-Compartments auf dem selben Deck anzuordnen und sie trotzdem über ein einziges Treppenhaus miteinander und mit dem Kabinenbereich zu verbinden Dabei ist in diesem Ausführungsbeispiel das zweite Teilmodul nicht wie ein Container gestaltet, da er den normalen Ansprüchen eines Monuments der Kabine hinsichtlich Optik und Funktionalität entsprechen muss.

Gemäß einem weiteren Ausführungsbeispiel des erfindungsgemäßen Moduls ist das erste Teilmodul auf dem Hauptdeck und das zweite Teilmodul auf dem Frachtdeck untergebracht.

Diese Anordnung zweier vollwertiger Teilmodule bzw. Sub-Compartments, die lediglich durch einen einzigen Übergang und eine Aufstiegshilfe verbunden sind gewährleistet sowohl diese Kombination der Module auf Fracht- und Hauptdeckebene, als auch die erfindungsgemäße raum- und gewichtsminimierende Verbindung durch ein einziges Treppenhaus, eine einzige Aufstiegshilfe und / oder eine einzig Luke.

Weiterhin ist gemäß einem weiteren Ausführungsbeispiel des erfindungsgemäßen Moduls das Verbindungselement als optische Verkleidung und nicht zur Kraftaufnahme ausgestaltet.

Dabei bewerkstelligt das Verbindungselement die Verbindung der beiden Module durch den Fußboden der Frachtdeckebene hindurch. Eine Einleitung oder Aufnahme des Hauptanteils der Kräfte auf das Teilmodul muss dabei nicht durch das Verbindungselement geschehen, da das Teilmodul auf Frachtdeckebene vorzugsweise am Boden des Frachtdecks fixiert wird. Dort kann der wesentliche Kraftanteil in die Flugzeugstruktur eingeleitet werden. Dabei kann das Verbindungselement nur als Verkleidung dienen und beispielsweise als Dichtlippe eventuelle Freiräume zwischen den beiden Deckebenen schließen. Die Funktion des Verbindungselements ist hierbei also eher optischer Natur.

Gemäß einem weiteren Ausführungsbeispiel des erfindungsgemäßen Moduls ist das Verbindungselement gegen ein Schließelement austauschbar.

Sollte von dem erfindungsgemäßen Modul nur der Teil auf dem Hauptdeck benötigt werden, kann das Verbindungselement durch ein Schließelement ersetzt werden, um einen trittsicheren Verschluss in dem Fußboden des Hauptdecks innerhalb des ersten Teilmoduls zu integrieren. Das Schließelement muss deshalb eine derartige Festigkeit aufweisen, dass es allen Belastungen, die dieses Fußbodenelement ausgesetzt ist standhält.

Weiterhin ist gemäß einem weiteren Ausführungsbeispiel des erfindungsgemäßen Moduls die Verwendung eines entsprechenden Moduls in einem Flugzeug angegeben.

Gemäß einem weiteren Ausführungsbeispiel des erfindungsgemäßen Moduls ist ein Flugzeug angegeben, welches ein entsprechendes Modul aufweist.

Es sei darauf hingewiesen, dass der Begriff "Crew" die Personen der "Flight Crew" explizit umfasst und das mit einem Crew Rest Compartment auch ein Flight Crew Rest Compartment beschrieben werden kann. Ebenso sind alle Ausführungsformen, die hier für eine Flugzeugbesatzung beschrieben sind, in vollem Umfang von beliebigen Personen, so z.B. Passagieren verwendbar.

Weitere Ausführungsbeispiele und Vorteile der Erfindung ergeben sich aus der folgenden Figurenbeschreibung.

Die Darstellungen in den Figuren sind schematisch und nicht maßstäblich.
- Fig. 1: zeigt eine schematische, dreidimensionale Darstellung des erfindungsgemäßen Aufenthalts- und Schlafmoduls gemäß einem Ausführungsbeispiel des erfindungsgemäßen Moduls.
- Fig. 2: zeigt eine schematische, dreidimensionale Darstellung des erfindungsgemäßen Aufenthalts- und Schlafmoduls gemäß einem Ausführungsbeispiel des erfindungsgemäßen Moduls.
- Fig. 3: zeigt eine schematische, dreidimensionale Darstellung gemäß einem Ausführungsbeispiel des erfindungsgemäßen Moduls; Blick von schräg oben auf das Modul.
- Fig. 4: zeigt eine schematische, zweidimensionale vertikale Schnittdarstellung gemäß einem Ausführungsbeispiel des erfindungsgemäßen Moduls.
- Fig. 5: zeigt eine schematische, dreidimensionale Darstellung gemäß einem Ausführungsbeispiel des erfindungsgemäßen Moduls.
- Fig. 6: zeigt eine schematische, dreidimensionale Darstellung des erfindungsgemäßen Aufenthalts im Schlafmodul gemäß einem Ausführungsbeispiel des erfindungsgemäßen Moduls.
- Fig. 7: zeigt eine schematische, zweidimensionale vertikale Schnittdarstellung gemäß einem Ausführungsbeispiel des erfindungsgemäßen Moduls; Variante mit drei Teilmodulen auf Frachtdeckebene.
- Fig. 8: zeigt eine schematische, zweidimensionale Schnittdarstellung entlang der Längsachse eines Flugzeuges, die ein Ausführungsbeispiel des erfindungsgemäßen Moduls enthält.
- Fig. 9: zeigt eine schematische, dreidimensionale Darstellung des erfindungsgemäßen Aufenthalts im Schlafmodul gemäß einem Ausführungsbeispiel des erfindungsgemäßen Moduls.
- Fig. 10: zeigt eine schematische, zweidimensionale, Schnittdarstellung entlang der Längsachse eines Flugzeuges, das ein Ausführungsbeispiel des erfindungsgemäßen Moduls enthält.
- Fig. 11: zeigt eine schematische, zweidimensionale, vertikale Schnittdarstellung durch ein Ausführungsbeispiel des erfindungsgemäßen Moduls.
- Fig. 12: zeigt eine schematische, zweidimensionale, vertikale Schnittdarstellung durch ein Ausführungsbeispiel des erfindungsgemäßen Moduls.
- Fig. 13: zeigt eine schematische, zweidimensionale, vertikale Schnittdarstellung durch ein Ausführungsbeispiel des erfindungsgemäßen Moduls.
- Fig. 14: zeigt eine schematische, zweidimensionale, vertikale Schnittdarstellung durch ein Ausführungsbeispiel des erfindungsgemäßen Moduls.
- Fig. 15: zeigt eine schematische, dreidimensionale Darstellung des erfindungsgemäßen Aufenthalts im Schlafmodul gemäß einem Ausführungsbeispiel des erfindungsgemäßen Moduls.
- Fig. 16: zeigt eine schematische, dreidimensionale Schnittdarstellung entlang der Längsachse eines Flugzeuges.

Im Folgenden werden mit Verweis auf die Figuren bevorzugte Ausführungsbeispiele des erfindungsgemäßen Moduls beschrieben.

In der folgenden Figurenbeschreibung werden für die gleichen oder ähnlichen Elemente die gleichen Bezugsziffern verwendet.

Fig. 1 zeigt hierbei eine schematische, dreidimensionale Darstellung gemäß einem Ausführungsbeispiel der vorliegenden Erfindung. Es ist ein erstes Teilmodul 101 und ein zweites Teilmodul 102 gezeigt, wobei an das zweite Teilmodul 102 ein weiteres Modul 102b auf Frachtdeckebene angedockt ist. Dabei kann das Element 102b aber auch einen gewöhnlichen Container für ein Flugzeug auf Frachtdeckebene darstellen. Dabei weist das erste Teilmodul 101 eine erste Aufstiegshilfe 105a auf, von der aus das Crew-Mitglied in den oberen Bereich des Flugzeuges, die so genannte Crown Area gelangen kann. Es ist dabei deutlich der Schlafbereich 170 zu sehen, indem sich eine Schlafgelegenheit des ersten Teilmoduls befindet. Die Aufstiegshilfe 105a, mit der das Crew-Mitglied in den Arbeitsbereich 160 und Schlafbereich 170 gelangen kann, kann dabei als gewöhnliche Treppe ausgestaltet sein, es sind aber auch einzelne Stufen, eine Trittleiter, verschiedene Geländer oder mechanische Vorrichtungen zur Unterstützung des Aufstieges denkbar. Dabei ist der Aufstiegsbereich 110 derart ausgestaltet, dass sich alle Elemente des Aufstiegsbereichs, also das gesamte Treppenhaus 107, mit der Aufstiegshilfe 105a im Inneren des ersten Teilmoduls befinden. Dabei setzt sich das Treppenhaus 107 auch in dem auf Frachtdeckebene 103 liegenden Teil des erfindungsgemäßen Moduls fort, wo eine zweite Aufstiegshilfe 105b zur Verfügung gestellt wird. Damit wird dem Crew-Mitglied ermöglicht, direkt von dem oberen Teil des ersten Teilmoduls über das Treppenhaus in das zweite Dock-on-Modul auf Frachtebene 103 einzusteigen. Dabei ist ein Verbindungselement 115 deutlich sichtbar, was u. a. auch eine Luke enthält, die ein Öffnen und Verschließen des Zugangs in den unteren Frachtbereich ermöglicht. Dabei ist als Verbindungselement jede mechanische Konstruktion möglich, die eine feste Fixierung der beiden Teilmodule gegeneinander ermöglicht und sie somit zu einer Einheit verbindet. Sollte jedoch ein weiteres oder mehrere Teilmodule auf Frachtdeckebene am Fußboden des Frachtdecks fixiert sein, kann das Verbindungselement auch lediglich die mechanische Zusammenführung der beiden Teilmodule bewerkstelligen, ohne dass sie gegeneinander fixiert werden müssen. Die dabei entstehende Verbindung ist eher optischer Natur. Dies gilt auch für das Andocken eines Moduls auf Frachtdeckebene bzw. im Unterflurbereich an ein weiteres Modul auf Frachtdeckebene mittels eines Verbindungselements. Durch beide Fixierungsmöglichkeiten ist dabei die Möglichkeit gegeben, direkt über das Treppenhaus des ersten Teilmoduls durch eine Luke und eine zweite Aufstiegshilfe, die Teil des zweiten Teilmoduls ist, von dem ersten Teilmodul in das zweite Teilmodul zu gelangen. Dies gilt für alle Ausführungsbeispiele der vorliegenden Erfindung.

Die Form des zweiten Teilmoduls 102 entspricht der eines gewöhnlichen Frachtcontainers für ein Flugzeug 102b und kann somit optimal in die Frachtraumumgebung integriert werden kann. Dabei ist das zweite Teilmodul 102 an das erste Teilmodul 101 angedockt und bildet mit diesem eine Einheit. Weiterhin ist in diesem Ausführungsbeispiel der vorliegenden Erfindung auch möglich, dass das zweite Teilmodul 102 einen Übergangsbereich und eine Öffnung bereitstellt, so dass der benachbarte Container 102b durch ein weiteres Teilmoduls ersetzt werden kann, das direkt an den Übergangsbereich des zweiten Teilmoduls angedockt werden kann. Damit kann einer weiteren Bereitstellung einer Schlafgelegenheit oder Sitzgelegenheit nachgekommen werden. Dabei ist hier beispielhaft die Schlafgelegenheit 114 im zweiten Teilmodul 102 unterhalb des Hauptdecks 104 gezeigt. Für alle Ausführungsbeispiele und alle Teilmodule der vorliegenden Erfindung gilt dabei, dass jede Schlafgelegenheit in beliebigem Winkel zur Flugzeuglängsachse angebracht werden kann. Dies schließt natürlich nicht aus, dass in einem anderen Ausführungsbeispiel der vorliegenden Erfindung auch mehrere Schlafgelegenheiten im zweiten Teilmodul 102 zur Verfügung gestellt werden können neben Tischen, Stauräumen und anderem benötigten Mobiliar.

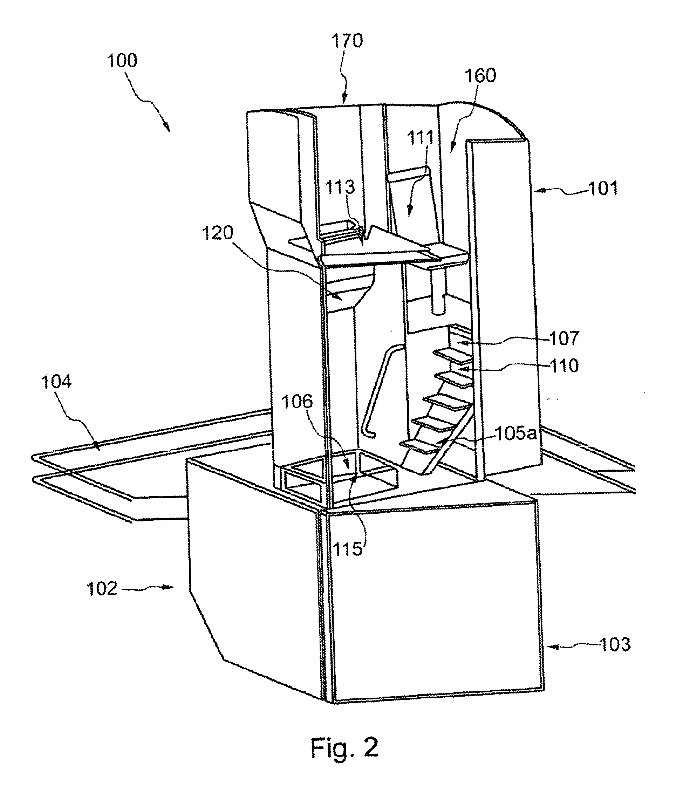

Fig. 2 zeigt eine weitere schematische, dreidimensionale Darstellung eines Aufenthalts- und Schlafmoduls gemäß der vorliegenden Erfindung. Dabei ist in dieser Figur deutlich der Arbeitsbereich 160 zu erkennen, der sich im ersten Teilmodul 101 befindet und eine Sitzgelegenheit 111 zur Verfügung stellt. Dieser Arbeitsbereich 160 hebt sich räumlich von dem darüberliegenden oder höherliegenden Schlafbereich 170 ab, wobei der Schlafbereich 170 eine erste Schlafgelegenheit 113 im ersten Teilmodul 101 zur Verfügung stellt. Durch die Ansicht ist deutlich zu sehen, dass im Aufstiegsbereich 110 ein Treppenhaus 107 zur Verfügung gestellt wird, das eine erste Aufstiegshilfe 105a aufweist. Diese Aufstiegshilfe 105a endet direkt an dem Verbindungselement 115 des ersten Teilmoduls, welches am Boden des Hauptdecks 104 angebracht ist. Dabei ist hier eine Luke 106 integriert, die den direkten Einstieg von dem Treppenhaus 107 durch die Luke in das zweite Teilmodul 102 auf der darunterliegenden Frachtebene 103 ermöglicht. Dabei sind neben den gezeigten Staufächern 120 auch Staumöglichkeiten und Ablagemöglichkeiten im dafür vorgesehenen Arbeitsbereich 160 möglich.

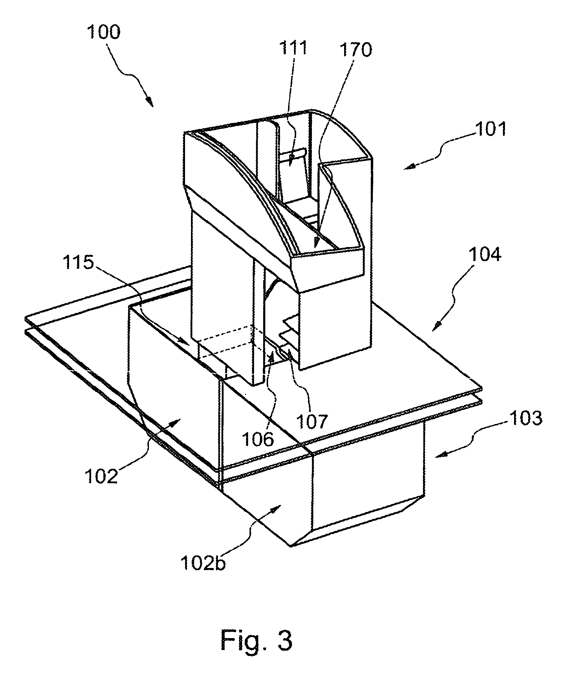

Fig. 3 zeigt eine schematische, dreidimensionale Darstellung eines Ausführungsbeispiels der vorliegenden Erfindung, wobei das Modul 100 ein erstes Teilmodul 101 und ein zweites Teilmodul 102 aufweist. Dabei ist die räumliche Trennung der beiden Teilmodule durch den Boden zwischen Hauptdeck 104 und Frachtdeck 103 deutlich zu erkennen. Ebenso wird in dieser Darstellung verdeutlicht, dass das zweite Teilmodul, welches auf Frachtdeckebene 103 integriert ist, die typische Form eines Flugzeugcontainers aufweist und damit ideal in die Umgebung des Frachtraumes integriert werden kann. Der wesentliche Vorteil des erfindungsgemäßen Moduls 100 ist hierbei, dass bei Bedarf einfach das zweite Teilmodul 102 bzw. das Dock-on-Modul 102 angedockt werden kann und dass es direkt über das Treppenhaus 107, was üblicherweise auch als Stairhouse bezeichnet wird, zugänglich ist. Der festinstallierte Teil 101 des Crew Rest Compartments in der Crown Area bietet durch die Möglichkeit, bei Bedarf ein zweites Crew Rest Compartment als Dock-on-Modul anzubringen, einen hohen Grad an Flexibilität.

Dieses Dock-on-Modul verfügt über ein Bett, wodurch auch die Forderung nach getrennten Kabinen für die Flight Crew erfüllt wird. Der Zugang erfolgt hierbei über eine zweite Aufstiegshilfe, die eine Leiter, eine Treppe oder einzelne Stufen sei kann. Vom Hauptdeck 104 aus gelangt man durch eine Luke 106, die das Verbindungselement 115 bereitstellt und beide Teilmodule fest miteinander verbindet. Hierbei ist deutlich in der vorliegenden Figur zu sehen, dass die räumliche Trennung der Kabinen ein hohes Maß an Flexibilität, Privatsphäre und Komfort für die Crew bietet. Aber auch der Gewinn von Fläche durch die Verlagerung eines Teils des Compartments unter das Hauptdeck 104 ist wesentlich für diese Erfindung. Die hohe Flexibilität durch die modulare Bauweise ist hierbei durch die beiden weiteren Dock-on-Module 102 und 102b gezeigt. Dabei besteht eben die Möglichkeit bei Nichtbedarf Gewicht zu sparen, da alle Dock-on-Module, die nicht benötigt sind z.B. 102 und 102b, aus der Frachtcontainerumgebung 103 entfernt werden können.

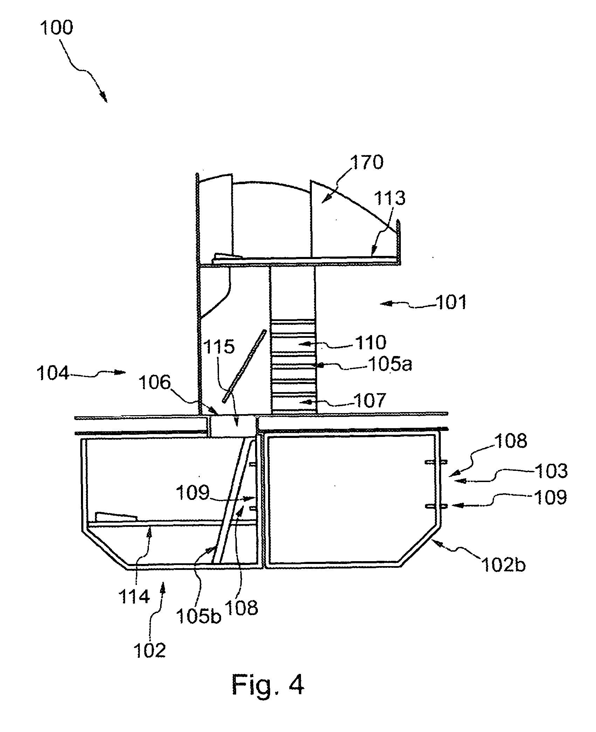

Fig. 4 zeigt eine schematische, zweidimensionale Schnittdarstellung durch das erfindungsgemäße Modul 100. Dabei ist durch den Querschnitt des Moduls deutlich zu sehen, dass in dem Treppenhaus 107 die Aufstieghilfe 105a angebracht ist und dass ein direkter Einstieg für das Crew-Mitglied von dem Treppenhaus durch das Verbindungselement 115 und die Luke 106 in das zweite Teilmodul, das Dock-on-Modul 102, ermöglicht wird. Dabei ist die zweite Aufstiegshilfe 105b nötig, die als Leiter, Treppe oder auch einzelne Stufen ausgestaltet sein kann. Ebenso sind beide zur Verfügung gestellten Schlafmöglichkeiten 113 und 114 in beiden Modulen auf unterschiedlichen Ebenen 103 und 104 gezeigt. Deutlich zu sehen ist auch, dass das zweite Teilmodul 102 einen Übergangsbereich 108 aufweist, der eine Öffnung 109 zum Durchtritt in weitere andockbare Teilmodule 102b auf Frachtdeckebene 103 enthält. Dabei kann auch jedes weitere Modul, das in modularer Weise das gesamte erfindungsgemäße Modul 100 auf Frachtdeckebene zu vergrößern vermag, einen Übergangsbereich 108 und eine Öffnung 109 aufweisen, um weitere Module als Dock-on-Module in das bestehende Modul 100 zu integrieren. Dabei sind die Übergangsbereiche mechanisch derart ausgestaltet, dass eine feste Fixierung gegeneinander als Einheit, beispielsweise durch Verschraubung, möglich sein kann. Dies funktioniert analog zur Andockung des zweiten Teilmoduls an das obere erste Teilmodul.

Sollte jedoch ein weiteres oder mehrere Teilmodule auf Frachtdeckebene am Fußboden des Frachtdecks fixiert sein, kann in dem Übergangsbereich auch lediglich die mechanische Zusammenführung der beiden Teilmodule stattfinden, ohne dass sie gegeneinander fixiert werden müssen. Die dabei entstehende Verbindung ist eher optischer Natur.

In dieser Figur ist schön zu sehen, dass durch schrittweise Integration verschiedener Teilmodule sowohl exakt den Bedürfnissen an Schlafgelegenheiten, Arbeitsplätzen und Stauraum nachgekommen werden kann, bei Nichtbedarf aber auch die Möglichkeit einer möglichst leichten Ausgestaltung des gesamten Moduls 100 möglich ist.

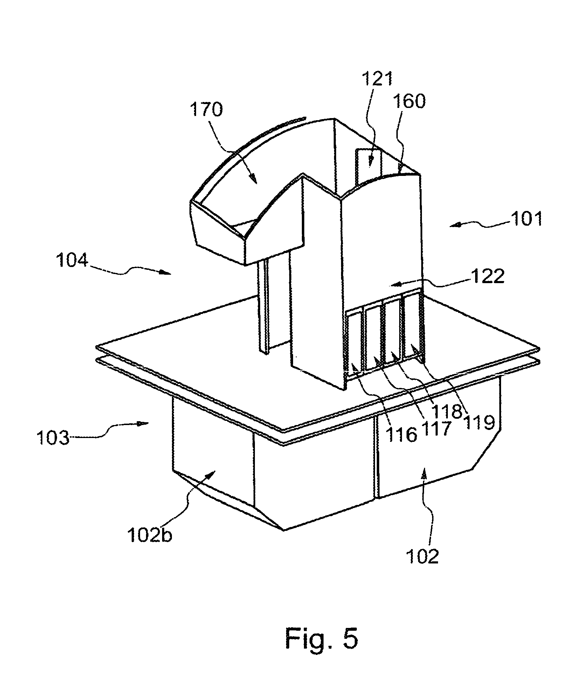

Fig. 5 zeigt eine schematische, dreidimensionale Darstellung des erfindungsgemäßen Moduls 100. Dabei ist das erste Teilmodul 101 auf der Hauptdeckebene 104 mit einem Schlafbereich 170 gezeigt, wobei die Trennwand 121 den Schlafbereich 170 vom Arbeitsbereicht 160 räumlich separiert. Dabei weist ein Arbeitsbereich 160 beispielsweise eine Sitzgelegenheit, Ablagemöglichkeiten oder auch einen Tisch in verschiedenster Form auf, um als Erholungsraum oder auch Arbeitsraum zu dienen. Durch die innenliegende Ausgestaltung des Treppenhauses ist an der Stirnseite 122 des erfindungsgemäßen Moduls der volle Stauraum unter dem Arbeitsbereich 160 zur Verfügung gestellt. Dieser kann somit in voller Höhe, voller Breite und voller Tiefe für beispielsweise Trolleys, die hier beispielhaft gezeigt sind 116, 117, 118 und 119, genutzt werden. Hier können aber auch andere wichtige Elemente der Flugzeuginneneinrichtung, wie Feuerlöscher, Garderobe oder Entertainmentsysteme untergebracht sein. Dabei ist in dieser Darstellung deutlich zu sehen, dass der Bereich der weiteren Module mit Teilmodul 102 und 102b weder in die Gestaltung des Hauptdeckbereichs 104 eingreift, noch dass durch die Veränderungen auf Frachtdeckebene 103 eine gestalterische oder installatorische Änderung auf Hauptdeckebene 104 sich deutlich machen würde. Diese völlig unabhängig installierte Einheit 101 erfährt keine Veränderung bei einer Umgestaltung der Module auf Frachtdeckebene 103.

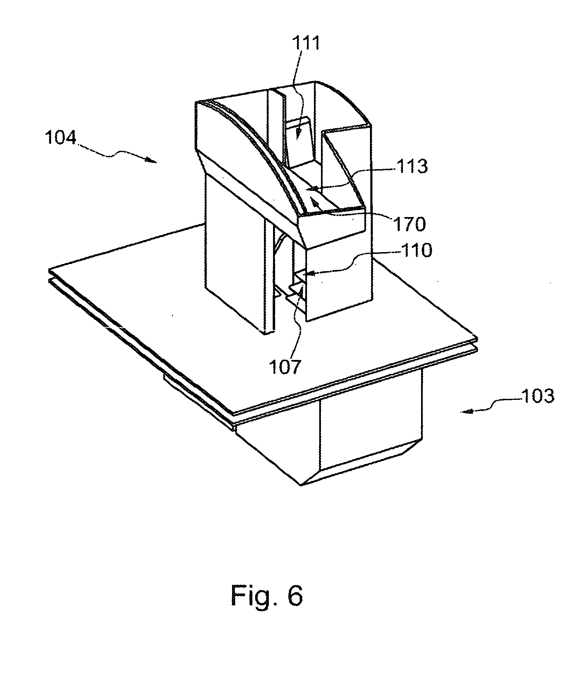

Fig. 6 zeigt eine weitere schematische, dreidimensionale Darstellung eines Aufenthalts- und Schlafmoduls gemäß einem Ausführungsbeispiel der vorliegenden Erfindung.

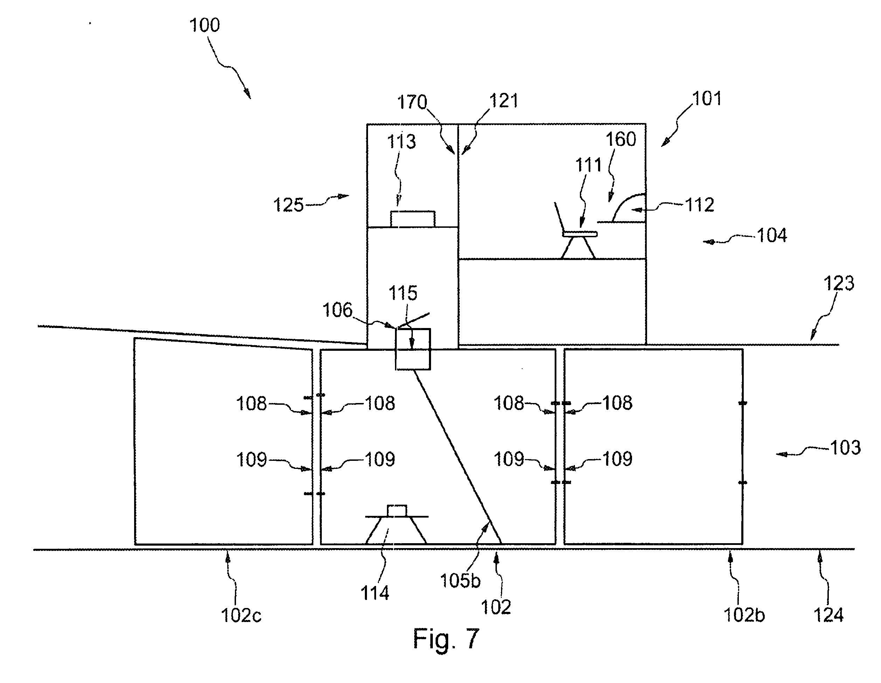

Fig. 7 zeigt eine weitere schematische, zweidimensionale vertikale Schnittdarstellung durch ein erfindungsgemäße Modul 100 gemäß einem Ausführungsbeispiel der vorliegenden Erfindung. Dabei ist deutlich gezeigt, dass auf beiden Seiten des zweiten Teilmoduls 102 weitere Dock-on-Module 102b, 102c angedockt werden können. Diese Andockung wird analog zu bisherig beschriebenen Andockungen bewerkstelligt. Dabei weisen alle weiteren Teilmodule einen Übergangsbereich 108 und eine Öffnung 109 auf, so dass die weiteren Module mechanisch fest oder auch nur lose verbunden mit dem Teilmodul in bisher beschriebener Weise kontaktiert werden können. Somit kann entlang der Längsrichtung des Flugzeuges die gewünschte Ausgestaltung des erfindungsgemäßen Moduls 100 erfolgen, was die Flexibilität des ganzen Systems und die Integration in den Frachtraum deutlich verbessert. Dabei ist zu bemerken, dass sowohl das zweite Teilmodul als auch jedes weitere Teilmodul je zwei Übergangsbereiche und zwei Öffnungen zur Andockung weiterer Module aufweisen kann. Dies ist beispielhaft in Fig. 7 am Teilmodul 102 gezeigt. Weiterhin kann jedes Teilmodul weitere Schlafgelegenheiten, Arbeitsplätze oder auch Ruheräume und Stauräume zur Verfügung stellen. Beispielhaft ist hier eine zweite Schlafgelegenheit 114 im zweiten Teilmodul 102 gezeigt. Ebenso ist das Verbindungselement 115 mit der Luke 106 gezeigt, durch das von der oberen Modulseite in die untenliegenden Module eingestiegen werden kann. Das erste Teilmodul 101 zeigt hier in dieser Figur deutlich die Trennung oder Bereitstellung von einem Arbeitsbereich 160 und einem Schlafbereich 170. Beide Bereiche befinden sich im oberen Bereich (125) des ersten Teilmoduls. Dabei ist zur Erhöhung der Privatsphäre und der Ruhemöglichkeit innerhalb der Crown Area eine Trennwand 121 eingefügt, wodurch die erste Schlafgelegenheit 113 schalltechnisch vom Arbeitsbereich 160 getrennt wird. Dieser Arbeitsbereich 160 ist mit einer Sitzgelegenheit 111 beispielhaft ausgeführt, wobei auch eine Ablagefläche bzw. ein Tisch 112 gezeigt ist. Dieses Beispiel eines Einrichtungsspektrums ist ebenso für jedes weitere Teilmodul bzw. Modul auf Frachtdeckebene 103 möglich. Dabei ist sowohl der Fußboden auf Frachtdeckebene (124), an dem das Dock-On_Modul befestigt sein kann, als auch der Fußboden der Hauptdeckebene (123) gezeigt. Dabei kann die Position des Verbindungselements im Fußboden (123) derart gewählt werden, dass eine Schwächung dieser Stelle vermieden wird und man die üblichen Querträger unterhalb des Fußbodens (123) nicht beschädigt.

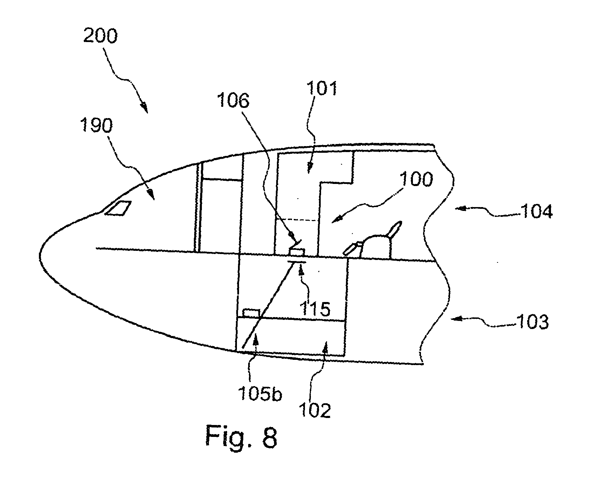

Fig. 8 zeigt eine schematische, zweidimensionale vertikale Schnittdarstellung durch ein Flugzeug entlang der Längsachse des Flugzeuges 200. Dabei ist das erfindungsgemäße Modul 100 mit einem ersten Teilmodul 101 und einem zweiten Teilmodul 102 gezeigt, wobei sich das zweite Teilmodul auf Frachtdeckebene 103 unterhalb des Hauptdecks 104 befindet. Um den Vorteil einer variablen Andockung des zweiten Teilmoduls bei Bedarf an das erste Teilmodul zu ermöglichen, ist hier beispielhaft das Verbindungselement 115 mit einer Luke 106 gezeigt. Der Abstieg in das untenliegende Dock-on-Modul 102 erfolgt über eine zweite Aufstiegshilfe 105b. Dabei ist eine Ausgestaltung des erfindungsgemäßen Moduls 100 derart möglich, dass ein direkter Zugang vom Cockpit 190 in das Modul 100 ermöglicht wird. Somit kann vermieden werden, dass die Flight Crew.bzw. die Piloten das Cockpit 190 und das Flight Crew Rest Compartment 100 verlassen müssen. Diese beispielhafte Ausgestaltung des erfindungsgemäßen Moduls mit direktem Anschluss an das Cockpit ist dabei nicht zwingend erforderlich, sondern kann entlang der ganzen Längsachse des Flugzeuges positioniert bzw. installiert werden.

Fig. 9 zeigt, eine schematische, dreidimensionale Darstellung eines Ausführungsbeispiels des erfindungsgemäßen Moduls 100. Es ist ein erstes Teilmodul bzw. Sub-Compartment 101 mit einem Schlafbereich 170 in dem oberen Bereich 125 des Moduls gezeigt. Dabei sind mehrere Schlafgelegenheiten 113 des ersten Teilmoduls zu sehen. Über ein Treppenhaus 107 ist es möglich, von dem Fußboden 123 des jeweiligen Decks mittels einer ersten Aufstiegshilfe 105a und einer zweiten Aufstiegshilfe 105b des zweiten Teilmoduls bzw. Sub-Compartments 102 in das jeweilige Modul zu gelangen. Dabei ist deutlich zu sehen, dass die senkrechte, übereinanderliegende Ausgestaltung der beiden Aufstiegsbereiche einen entscheidenden Platzvorteil gegenüber einer Lösung mit zwei separaten Treppenhäusern in sich birgt. Um den Einstieg in das senkrechte Treppenhaus 107 zu erleichtern, kann eine zusätzliche Aufstiegshilfe, wie hier beispielhaft als Trittbrett 105c gezeigt, installiert sein.

Es ist als unteres Modul 102 eine Variante mit mehren Schlafmöglichkeiten 114 gezeigt, die durch Trennwände 121 zur Verbesserung des Komforts der Benutzer separiert sind.

Fig. 10 zeigt eine schematische, zweidimensionale, Schnittdarstellung des Moduls entlang der Längsachse eines Flugzeuges. Dabei sind das erste, obere Teilmodul 101 bzw. Sub-Compartment und das zweite untere Teilmodul 102 bzw. Sub-Compartment in das Flugzeug mit Rumpf 191 integriert. In dieser Ansicht ist deutlich zu erkennen, dass beide Teilmodule durch lediglich ein Treppenhaus 107 mit den beiden Aufstiegshilfen 105a und 105b, die auch eine Aufstiegshilfe bilden können, verbunden sind. Dabei wird bei dieser Anordnung nur der Platz für den Einstieg in die Module benötigt, der ohnehin für das Treppenhaus eines einzelnen Compartments beansprucht wird. Dies wird insbesondere durch die senkrechte und übereinander ausgestaltete Form der Leitern 105a und 105b erreicht. Das Verbindungselement 115 ist ermöglicht, dass beide

Dabei separiert die Trennschicht 126 beide Teilmodule. Diese Trennschicht kann, falls beide Teilmodule auf dem gleichen Deck angeordnet sind ein Zwischendeck bilden. Ist das obere Teilmodul auf dem Hauptdeck untergebracht, z.B. in der Crown Area und das zweite Teilmodul auf dem Frachtdeck, so bildet die Trennschicht 126 den Fußboden des Hauptdecks.

Fig. 11 zeigt eine zweidimensionale, vertikale Schnittdarstellung durch ein Ausführungsbeispiel des erfindungsgemäßen Moduls. Dabei besteht das gezeigte Compartment aus zwei Teilmodulen, die über ein einziges Treppenhaus verbunden sind. Der Zugang erfolgt mittels zweier Leitern 105a und 105b, wobei diese beispielhaft für eine beliebige Aufstiegshilfe steht. Der obere Bereich 125 des ersten Teilmoduls stellt in dieser Ausführungsform des Moduls verschiedene Schlafbereiche zur Verfügung, die durch mehrere Trennwände 121 separiert sind.

Das untere Teilmodul 102 weist eine Schlafgelegenheit 114 und eine Sitzgelegenheit 111 auf.

Fig. 12 zeigt eine zweidimensionale, vertikale Schnittdarstellung durch ein Ausführungsbeispiel des erfindungsgemäßen Moduls. Dabei ist hier die Luke 106 im geöffneten Zustand mit der Lukenklappe 106a gezeigt. Ebenso ist klar zu erkennen, das beide Teilmodule 101 und 102 durch nur ein Treppenhaus 107 verbunden sind, jedoch beide Aufstieghilfen 105a und 105b seitlich, genauer in der x- und y-Richtung versetzt zu einander angebracht sind.

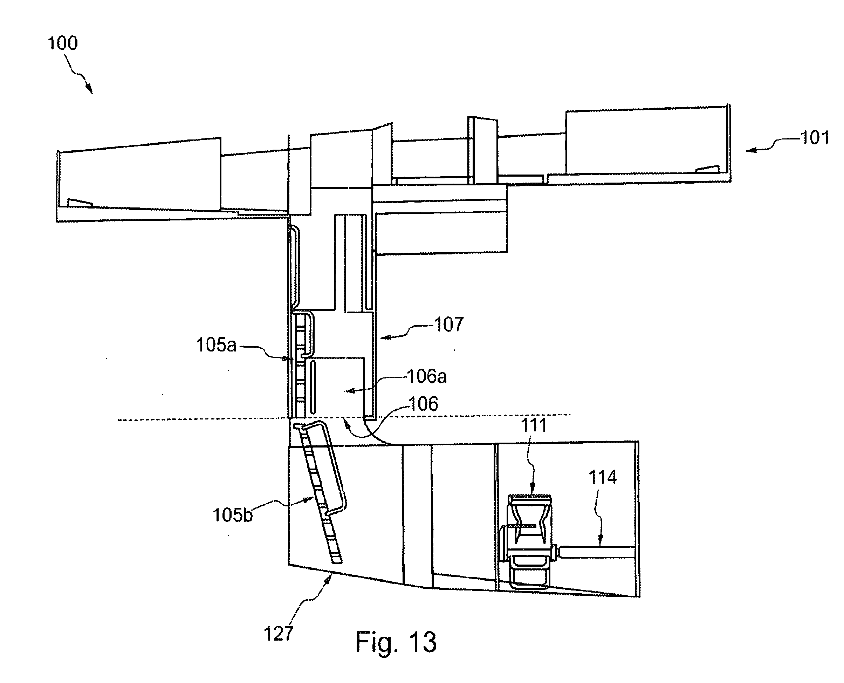

Fig. 13 zeigt eine zweidimensionale, vertikale Schnittdarstellung durch ein Ausführungsbeispiel des erfindungsgemäßen Moduls. Der Durchtritt von dem unteren in das obere Modul erfolgt durch die geöffnete Lukenklappe 106a der Luke 106. Es ist in dieser Ansicht deutlich zu sehen, dass beide Aufstiegshilfen 105a und 105b getrennte Bauteile sind Dies ermöglicht die Dock-On Kompatibilität beider Module, was mittels eines nicht gezeigten Verbindungselements zwischen beiden Modulen realisiert wird. Sollte das zweite Teilmodul auf dem Frachtdeck untergebracht sein, so kann es zur Anpassung der Modulform an die Containerumgebung und den Rumpf des Fluges vorteilhaft sein, den Modulboden angeschrägt 127 auszuführen. In diesem Ausführungsbeispiel werden ebenso im ersten Teilmodul Schlafgelegenheiten und im unteren eine oder mehrere Schlafgelegenheiten 114 und ein oder mehrere Sitze 111 dargestellt.

Fig. 14 zeigt eine zweidimensionale, vertikale Schnittdarstellung durch ein Ausführungsbeispiel des erfindungsgemäßen Moduls. Dabei ist hier der angeschrägte Modulboden 127 gezeigt, der eine bessere Integration in den Frachtraum zur Folge hat. Auch hier sind die beiden Aufstiegshilfen übereinander angeordnet, jedoch sind die Treppen bzw. Leitern leicht in x-Richtung versetzt. Dies ist deutlich in Fig.15 zu sehen, die eine schematische, dreidimensionale Darstellung des erfindungsgemäßen Moduls zeigt. Dabei ist auch das Trittbrett 105c als zusätzliche Hilfe zum Ein- und Ausstieg gezeigt.

Dabei ist deutlich zu sehen, dass das untere Modul mehrere Abteile mit eigenen Betten und Sitzgelegenheiten enthält, welche wiederum durch Trennwände separiert sind.

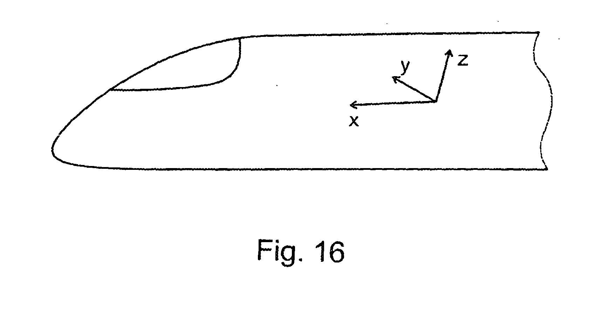

Fig.16 zeigt eine dreidimensionale Schnittdarstellung entlang der Längsachse eines Flugzeuges. Hierbei werden die verwendeten Raumrichtungen x, y und z definiert. Die x-Achse ist die Längsachse, die y-Achse ist die Querachse des Flugzeuges. Z steht senkrecht auf der x-y-Ebene.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN:

- 100: Aufenthalts- und Schlafmodul
- 101: erstes Teilmodul
- 102: zweites Teilmodul
- 102 b: weiteres Modul oder Contrainer auf Frachtdeck
- 102 c: weiteres Modul oder Contrainer auf Frachtdeck
- 103: Frachtdeck
- 104: Hauptdeck
- 105a: erste Aufstiegshilfe
- 105b: zweite Aufstiegshilfe
- 105c: zus. Aufstiegshilfe, Trittbrett
- 106: Luke
- 106a: Lukenklappe
- 107: Treppenhaus
- 108: Übergangsbereich
- 109: Öffnung
- 110: Aufstiegsbereich
- 111: Sitzgelegenheit
- 112: Tisch
- 113: .Schlafgelegenheit erstes Teilmodul
- 114: Schlafgelegenheit zweites Teilmodul
- 115: Verbindungselement
- 116 - 119: Trolleys
- 120: Staufächer
- 121: Trennwand
- 122: Stirnseite
- 123: Fußboden
- 124: Fußboden auf Frachtdeck
- 125: oberer Bereich
- 126: Trennschicht
- 127: angeschrägter Modulboden
- 150: Eingangsbereich
- 160: Arbeitsbereich
- 170: Schlafbereich
- 190: Cockpit
- 191: Flugzeugrumpf
- 200: Flugzeug

## Patentansprüche

1. Aufenthalts- und Schlafmodul (100) zur Integration in ein Flugzeug und zur Unterbringung von zumindest einem Mitglied einer Flugzeugbesatzung, das Modul (100) aufweisend:
ein erstes Teilmodul (101),
ein zweites Teilmodul (102);
wobei das erste Teilmodul (101) zum Andocken des zweiten Teilmoduls (102) ausgeführt ist;
wobei das erste Teilmodul oder das zweite Teilmodul ein Verbindungselement (115) aufweist;
wobei das erste Teilmodul zum Anordnen auf einer anderen vertikalen Höhe eines Flugzeuges (200) als das zweite Teilmodul ausgeführt ist;
und wobei das Verbindungselement derart ausgestaltet ist, dass das zweite Teilmodul mittels des Verbindungselements an das erste Teilmodul angedockt werden kann; und
wobei zur Integration in das Flugzeug das erste Teilmodul auf einem Hauptdeck und das zweite Teilmodul auf einem Frachtdeck unterbringbar ist.

2. Modul nach Anspruch 1,
wobei das zweite Teilmodul mindestens eine Schlafgelegenheit (114) aufweist.

3. Modul nach einem der vorherigen Ansprüche 1 bis 2, weiterhin aufweisend:
ein Treppenhaus (107)
eine erste Aufstiegshilfe (105a);
wobei beide Teilmodule (101, 102) direkt über das Treppenhaus erreicht werden.

4. Modul nach einem der vorherigen Ansprüche 1 bis 3,
wobei das zweite Teilmodul die Form eines Frachtcontainers für ein Flugzeug hat.

5. Modul nach einem der vorherigen Ansprüche 1 bis 4,
wobei das zweite Teilmodul einen Übergangsbereich (108) mit einer Öffnung (109) aufweist;
wobei die Öffnung zum Übertritt eines Besatzungsmitgliedes von dem zweiten Teilmodul in weitere Teilmodule ausgestaltet ist;
wobei die weiteren Teilmodule auf dem Frachtdeck (103) des Flugzeuges (200) untergebracht sind.

6. Modul nach einem der vorherigen Ansprüche 1 bis 5,
das erste Teilmodul (101) aufweisend:
einen ersten Schlafbereich (170); und
einen Aufstiegsbereich (110) zum Aufstieg von einer unteren Ebene in einen oberen Bereich (125) des ersten Teilmoduls.

7. Modul nach einem der vorherigen Ansprüche 1 bis 6,
wobei das erste Teilmodul derart ausgebildet ist, um im Wesentlichen direkt an das Cockpit (190) anzuschließen.

8. Modul nach einem der vorherigen Ansprüche 1 bis 7,
wobei beide Teilmodule durch zumindest ein Element ausgewählt aus der Gruppe bestehend aus ein einziges Treppenhaus, eine einzige Leiter, ein einziger Gang und eine einzige Luke miteinander verbunden sind.

9. Modul nach Anspruch 8,
wobei das erste Teilmodul in einer Crown Area des Flugzeuges angeordnet ist.

10. Modul nach einem der vorherigen Ansprüche 1 bis 9,
wobei das Verbindungselement als optische Verkleidung und nicht zur Kraftaufnahme ausgestaltet ist.

11. Modul nach einem der vorherigen Ansprüche 1 bis 10,
wobei das Verbindungselement gegen ein Schließelement austauschbar ist.

12. Verwendung eines Moduls (100) in einem Flugzeug nach einem der Ansprüche 1 bis 11.

13. Flugzeug mit einem Modul (100) nach einem der Ansprüche 1 bis 11.

14. Flugzeug nach Anspruch 13;
wobei das erste Teilmodul als eine feste Installation auf einem Hauptdeck (104) des Flugzeuges ausgeführt ist.

## Claims

1. A residence and sleeping module (100) for integration into an aircraft and for accommodating at least one member of an aircraft crew, with the module (100) comprising:
a first partial module (101);
a second partial module (102);
wherein the first partial module (101) is adapted for docking the second partial module (102) to it;
wherein the first partial module or the second partial module comprises a connecting element (115);
wherein the first partial module is designed to be arranged at a vertical height of an aircraft (200), which vertical height differs from that of the second partial module;
and wherein the connecting element is designed such that the second partial module can be docked to the first partial module by means of the connecting element; and
wherein for integration into the aircraft the first partial module can be positioned on a main deck of the aircraft and the second partial module can be positioned on a cargo deck.

2. The module of claim 1,
wherein the second partial module comprises at least one sleeping facility (114).

3. The module of any one of the preceding claims 1 to 2, further comprising:
a staircase (107);
a first ascent device (105a);
wherein both partial modules (101, 102) are reached directly by way of the staircase.

4. The module of any one of the preceding claims 1 to 3,
wherein the second partial module is designed in the form of a cargo container for an aircraft.

5. The module of any one of the preceding claims 1 to 4,
wherein the second partial module comprises a transition region (108) with an opening (109);
wherein the opening is designed for a crew member to move from the second partial module to further partial modules;
wherein the further partial modules are accommodated on the cargo deck (103) of the aircraft (200).

6. The module of any one of the preceding claims 1 to 5,
with the first partial module (101) comprising:
a first sleeping region (170); and
an ascent region (110) for climbing from a lower level to an upper region (125) of the first partial module.

7. The module of any one of the preceding claims 1 to 6,
wherein the first partial module is designed so as to essentially directly follow on from the cockpit (190).

8. The module of any one of the preceding claims 1 to 7,
wherein both partial modules are connected to each other by means of at least one element selected from the group consisting of a single staircase, a single ladder, a single passage and a single hatch.

9. The module of claim 8,
wherein the first partial module is arranged in a crown area of the aircraft.

10. The module of any one of the preceding claims 1 to 9,
wherein the connecting element is designed as an optical trim element rather than for force take-up.

11. The module of any one of the preceding claims 1 to 10,
wherein the connecting element can be exchanged for a closing element.

12. The use of a module (100) in an aircraft of any one of claims 1 to 11.

13. An aircraft comprising a module (100) of any one of claims 1 to 11.

14. Aircraft of claim 13,
wherein the first partial module is adapted as a fixed installation on a main deck (104) of the aircraft.

## Revendications

1. Module de séjour et de repos (100) destiné à l'intégration dans un avion et au logement d'au moins un membre d'un équipage d'avion, le module (100) présentant :
un premier module partiel (101),
un second module partiel (102) ;
module de séjour et de repos dans lequel,
le premier module partiel (101) est réalisé pour l'arrimage du second module partiel (102) ;
le premier module partiel ou le second module partiel présente un élément d'assemblage (115) ;
le premier module partiel est réalisé pour l'agencement sur une autre hauteur verticale d'un avion (200) que le second module partiel ;
et l'élément d'assemblage est configuré de telle sorte que le second module partiel peut être arrimé au moyen de l'élément d'assemblage sur le premier module partiel ;
et,
pour l'intégration dans l'avion, le premier module partiel peut être logé sur un plancher principal et le second module partiel sur un plancher de soute à fret.

2. Module suivant la revendication 1, dans lequel le second module partiel présente au moins une place pour dormir (114).

3. Module suivant l'une des revendications précédentes 1 à 2, présentant en outre :
une cage d'escalier (107),
un premier auxiliaire de montée (105a) ;
les deux modules partiels (101, 102) étant atteints directement par la cage d'escalier.

4. Module suivant l'une des revendications précédentes 1 à 3, dans lequel le second module partiel a la forme d'un conteneur de fret pour un avion.

5. Module suivant l'une des revendications précédentes 1 à 4, dans lequel le second module partiel présente une zone de passage (108) avec une ouverture (109) ;
l'ouverture est configurée pour le passage d'un membre d'équipage du second module partiel dans d'autres modules partiels ;
les autres modules partiels sont logés sur le plancher de soute à fret (103) de l'avion (200).

6. Module suivant l'une des revendications précédentes 1 à 5, dans lequel le premier module partiel (101) présente :
une première zone de repos (170) ; et
une zone de montée (110) pour monter d'un plan inférieur dans une zone supérieure (125) du premier module partiel.

7. Module suivant l'une des revendications précédentes 1 à 6, dans lequel le premier module partiel est réalisé pour un raccordement essentiellement direct au cockpit (190).

8. Module suivant l'une des revendications précédentes 1 à 7, dans lequel les deux modules partiels sont assemblés entre eux par au moins un élément sélectionné parmi le groupe constitué d'une cage d'escalier unique, d'une échelle unique, d'un couloir unique et d'une trappe unique.

9. Module suivant la revendication 8, dans lequel le premier module partiel est disposé dans un compartiment réservé au personnel navigant de l'avion.

10. Module suivant l'une des revendications précédentes 1 à 9, dans lequel l'élément d'assemblage est configuré sous forme d'habillage optique et non pas pour supporter des efforts.

11. Module suivant l'une des revendications précédentes 1 à 10, dans lequel l'élément d'assemblage est échangeable contre un élément de fermeture.

12. Utilisation d'un module (100) dans un avion suivant l'une des revendications 1 à 11.

13. Avion comprenant un module (100) suivant l'une des revendications 1 à 11.

14. Avion suivant la revendication 13, dans lequel le premier module partiel est réalisé sous forme d'installation fixe sur un plancher principal (104) de l'avion.
